# EUROPEAN PATENT SPECIFICATION

(11) **EP 3 374 467 B1**
(45) Date of publication and mention of the grant of the patent: **15.04.2020**
(21) Application number: 16794984.1
(22) Date of filing: 08.11.2016
(51) Int. Cl.: C08L 83/04, C09K 19/20, C09K 19/04, C09K 19/40, C09K 19/56, C09K 19/22, C09K 19/30, C09K 19/52, G02F 1/1337

(54) **COMPOSITIONS OF PHOTO-ALIGNABLE MATERIALS**
ZUSAMMENSETZUNGEN AUS PHOTO-AUSRICHTBAREN MATERIALIEN
COMPOSITIONS DE MATÉRIAUX PHOTO-ALIGNABLES

(30) Priority: 11.11.2015 EP 15194025
(43) Date of publication of application: 19.09.2018
(73) Proprietor: ROLIC Technologies AG, 4123 Allschwill (CH)
(72) Inventor: RIDAOUI, Hassan, 68460 Mulbach (FR); CHAPPELLET, Sabrina, 68128 Village-Neuf (FR); IBN-ELHAJ, Mohmmed, 4123 Allschwil (CH)
(74) Representative: Peduzzi, Elisa
(86) International application number: PCT/EP2016/076930
(87) International publication number: WO 2017/080977

(56) References cited:
- EP-A1- 1 764 405
- WO-A1-2009/017240
- WO-A1-2013/026691
- WO-A1-2013/050121
- WO-A1-2014/191292
- US-B1- 6 277 502

## Description

The present invention relates to compositions comprising a polymer comprising a monomer of formula (IV) and an additive selected from the group consisting of acid generators, base generators, acids or bases.

Polymer comprising a monomer of formula (I) are already known in the art and are used as photo-alignable materials for optical and electro-optical applications. These photo-alignable materials are coated on substrates, dried by heating and subsequently irradiated with UV light. Subsequently, the photo-alignable materials may be subjected to thermal treatment. A method for preparing liquid crystal cells is by assembling two coated substrates and pouring the liquid crystal on the coated substrates. After assembly the liquid crystal cell is annealed by heat. It is also possible to subject the cell to a termal treatment before pouring with the liquid crystal. In some applications, the annealing temperature is above 90°C, in other applications above 100°C, in still other above 110°C, in other applications above 120°C or 130°C.

Liquid crystal cells that have been annealed at higher temperature, i.e. above 100°C may lose their electro-optical properties. Therefore there is the need to develop compositions comprising photo-alignable materials that show good electro-optical properties after thermal treatment.

It is therefore an aim of the present invention of providing a composition which allows the stabilization of the photo-alignable material at high temperatures, preferably above 100°C.

### SUMMARY OF THE INVENTION

It is an object of the present invention to provide a composition comprising a photo-alignable material comprising or deriving from a monomer of formula (IV) and an additive selected from the group consisting of acid generators, base generators, acids and bases.

The invention further relates to the use of said composition for the orientation of liquid crystals.

It is an object of the present invention to provide optical or electro-optical unstructured or structured elements comprising said composition.

### DETAILED DESCRIPTION OF THE INVENTION

The invention relates to compositions comprising a photo-alignable material comprising or deriving from a monomer of formula (IV) and an additive selected from the group consisting of acid generators, base generators, acids and bases.

Preferably, the photo-alignable materials according to the invention incorporate photo-alignable moieties, which are capable of developing a preferred direction upon exposure to aligning light and thus inducing an alignment capability for liquid crystals.

Photo-alignable moieties preferably have anisotropic absorption properties and preferably exhibit absorption within the wavelength range from 230 to 500 nm. Preferably the photo-alignable moieties have carbon-carbon, carbon-nitrogen, or nitrogen-nitrogen double bonds.

For example, photo-alignable moieties are substituted or un-substituted azo dyes, anthraquinone, coumarin, mericyanine, methane, 2-phenylazothiazole, 2-phenylazobenzthiazole, stilbene, cyanostilbene, chalcone, cinnamate, stilbazolium, 1,4-bis(2-phenylethylenyl)benzene, 4,4'-bis(arylazo)stilbenes, perylene, 4,8-diamino-1,5-naphthoquinone dyes, diaryl ketones, having a ketone moiety or ketone derivative in conjugation with two aromatic rings, such as for example substituted benzophenones, benzophenone imines, phenylhydrazones, and semicarbazones. Preparation of the anisotropically absorbing materials listed above are well known as shown, e.g. by Hoffman et al., U.S. Patent No. 4,565,424, Jones et al., in U.S. Patent.No. 4,401, 369, Cole, Jr.et al., in U.S. Patent. No. 4,122,027, Etzbach et al., in U.S. Patent No. 4,667,020, and Shannon et al., in U.S. Patent No. 5,389,285.

According to the invention, the photo-alignable moieties comprise a cinnamate.

A photo-alignment material may have the form of a monomer, oligomer or polymer. The photo-alignable moieties can be covalently bonded within the main chain or within a side chain of a polymer or oligomer or they may be part of a monomer.

Polymers denotes for example to polyacrylate, polymethacrylate, polyimide, polyamic acids, polymaleinimide, poly-2-chloroacrylate, poly-2-phenylacrylate; unsubstituted or with C₁-C₆alkyl substituted poylacrylamide, polymethacyrlamide, poly-2-chloroacrylamide, poly-2-phenylacrylamide, polyvinylether, polyvinylester, polystyrene-derivatives, polysiloxane, staright-chain or branched alkyl esters of polyacrylic or polymethacrylic acids; polyphenoxyalkylacrylates, polyphenoxyalkylmethacrylates, polyphenylalkylmathacrylates, with alkyl residues of 1-20 carbon atoms; polyacrylnitril, polymethacrylnitril, polystyrene, poly-4- methylstyrene or mixtures thereof.

Further, preferred photo-alignable monomers or oligomers or polymers are described in WO 2014/191292 A1,

U.S. Patent No. 5,539,074, U.S. Patent No.6,201,087, U.S. Patent No. 6,107,427, U.S. Patent No.6,335,409 and U.S. Patent No.6,632,909.

Already known in the art is a photo-alignable material comprising or deriving from a monomer of formula (I) 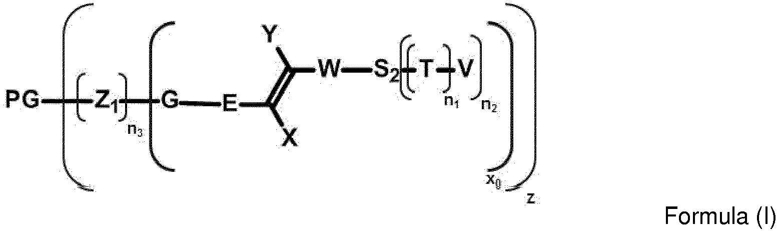 wherein
PG represents a polymerizable group;
G and S₂ each independently from each other represent a spacer unit;
Z₁ represents a single bond or a straight-chain or branched, substituted or unsubstituted C₁-C₂₄ alkylen, especially C₁-C₁₂ alkylen, more especially C₁-C₈ alkylen, more especially C₁-C₆ alkylen, most especially C₁-C₄ alkylen, most especially C₁-C₂ alkylen in which one or more -C-. -CH-, CH₂- groups may be replaced by a linking group;
E represents an aromatic group, a single bond, an oxygen atom, a sulphur atom,-NH-, -N(C₁-C₆alkyl)-, -CR²R³, -OCO-, -COO-, -OOC-, -NHCO-, -CONH-, -CONR²-, - NR²CO, -SCS, -CO-, wherein R² and R³ are independently from each other hydrogen or a cyclic, straight-chain or branched, substituted or unsubstituted C₁-C₂₄ alkyl, wherein one or more -C-, -CH-, -CH₂- groups may be independently from each other be unreplaced or replaced by a linking group, and with the proviso that at least one of R² and R³ is not hydrogen;
X, Y are independently from each other H, CN, F or Cl, with the proviso that at least one is H;
W is either a substituted or unsubstituted phenyl ring or an ester group;
T represents a single bond, a straight-chain or branched C₁-C₁₆ alkyl group, wherein one or more -C-, -CH-, -CH₂- or -CH₃- groups may independently from each other be unreplaced or replaced by at least one heteroatom and/or by a primary, secondary, tertiary or quaternary nitrogen, such as an ammonimum cation, and/or a linking group;
z is an integer from 0 to 4; more preferably z is either 1 or 2;
x₀ is an integer from 1 to 2; and
n₁ is an integer from 0 to 15, preferably from 1 to 10, more preferably from 1 to 8, more preferably from 1 o 5, most preferably from 1 to 3, most preferred n₁ is 1;
n₂ is an integer from 1 to 15, preferably from 1 to 10, more preferably from 1 to 8, more preferably from 1 to 5, most preferably from 1 to 3, most preferred n₂ is 1;
n₃ is an integer from 0 to 2; preferably n₃ is 0 or 1;
V represents an end group

The wording "polymerizable group" as used in the context of the present invention refers to a functional group that can be subjected to polymerization (optionally with other comonomers) to yield an oligomer, dendrimer, polymer or copolymer. The obtained oligomer, dendrimer, polymer or copolymer can either be linear, branched or crosslinked. For a person skilled in the art it will be obvious which functional groups are intended for any specific polymer. Thus for example in case of "imid monomer" as the indicated polymerizable group it is obvious to a person skilled in the art that the actual monomer units for polymerization to yield a polyimid are e.g. diamines and dianhydrides. Similarly regarding "urethane monomer" the actual monomer units are diols and diisocyanates.

The term "a functional group" means that there can be more than one functional group, as for example 2 functional groups or 3 functional groups or 4 functional groups. So for example the compound of formula (I) can have 1, 2, 3 or 4 functional groups in the PG.

PG is preferably selected from unsubstituted or substituted acrylate, methacrylate, 2-chloroacrylate, 2-phenylacrylate, optionally *N*-lower alkyl substituted acrylamide, methacrylamide, 2-chloroacrylamide, 2-phenylacrylamide, vinyl, allyl, vinyl ether and ester, allyl ether and ester, carbonic acid ester, acetal, urea, maleinimide, norbornene, norbornene derivatives, epoxy, styrene and styrene derivatives, for example alphamethylstyrene, p-methylstyrene, p-tert-butyl styrene, p-chlorostyrene, siloxane, silane, diamine, imide monomers, amic acid monomers and their esters, amidimide monomers, maleic acid and maleic acid derivatives, for example, di-n-butyl maleate, dimethyl maleate, diethyl maleate, etc, fumaric acid and fumaric acid derivatives, for example, di-n-butyl fumarate, di-(2-ethylhexyl) fumarate, etc, urethanes or their corresponding homo- and co-polymers.

More preferably the polymerizable group PG is selected from acrylate, methacrylate, vinyl ether and ester, epoxy, styrene derivatives, siloxane, silane, maleinimide, diamine, norbornene, norbornene derivatives, imide monomers, amic acid monomers and their corresponding homo and copolymers, or an unsubstituted or substituted, aliphatic, aromatic and/or alicyclic diamine group.

More preferably PG represents an unsubstituted or substituted, aliphatic, aromatic and/or alicyclic diamine group, siloxane, maleinimide, especially diamine group having from 1 to 40 carbon atoms, wherein the diamine group comprises an aliphatic group, which may comprise one or more heteroatom and/or bridging group; and/or an aromatic group; and/or an alicyclic group or a siloxane.

Even more preferably PG is a siloxane compound.

The spacers G and S₂ independently from each other represent a single bond or a spacer unit, which could be a cyclic, straight-chain or branched, substituted or unsubstituted C₁-C₂₄ alkylen, especially C₁-C₁₂ alkylen, especially C₁-C₈ alkylen, more especially C₁-C₆ alkylen, most especially C₁-C₄ alkylen; in which one or more, preferably non-adjacent, -C-, -CH-, -CH₂- group may be unreplaced or at least once replaced by a linking group.

More preferably spacers G and S₂ independently from each other represent C₁-C₂₄ alkylen, in which one or more, preferably non-adjacent, -C-, -CH-, -CH₂- group may be unreplaced or at least once replaced by a non-aromatic, aromatic, unsubstituted or substituted carbocyclic or heterocyclic group connected via bridging groups.

Substituents of the non-aromatic, aromatic, alicyclic group or phenylene, cylohexylen or the carbocyclic or heterocyclic group in G and S₂ are preferably, at least one halogen, such as chloro or fluoro or trifluoromethyl, and/or C₁-C₆alkoxy, preferably methoxy, ethoxy, propoxy, butoxy, pentoxy, hexoxy, and/or oxygen.

Preferably, the non-aromatic, aromatic, unsubstituted or substituted carbocyclic or heterocyclic group connected via bridging groups of G and S₂ each independently from each other are represented by formula (II):

(Z^{2a})ₐ₄-(Z¹-C¹)ₐ₁-(Z²-C²)ₐ₂-(Z^{1a})ₐ₃- (II)

wherein:
C¹, C² each independently represents a non-aromatic, aromatic, optionally substituted carbocyclic or heterocyclic group, preferably connected to each other via the bridging groups Z¹ and Z² and/or Z^{1a}, preferably C¹ and C² are connected at the opposite positions via the bridging groups Z¹ and Z² and/or Z^{1a}, so that groups S¹ and/or S² have a long molecular axis, and
Z¹, Z², Z^{1a}, Z^{2a} each independently represents a bridging group, preferably selected from -CH(OH)-, -CH₂-, -O-, -CO-, -CH₂(CO)-, -SO-, -CH₂(SO)-, -SO₂-, -CH₂(SO₂)-, -COO-, -OCO-, -COCF₂-, -CF₂CO-, -S-CO-, -CO-S-, -SOO-, -OSO-, -SOS-, -CH₂-CH₂-, -OCH₂-, -CH₂O-, -CH=CH-, -C≡C-, -CH=CH-COO-, -OCO-CH=CH-, -CH=N-, -C(CH₃)=N-, -O-CO-O-, -N=N- or a single bond,
Wherein a₁, a₂, a₃, a₄ each independently represents an integer from 0 to 3, such that a₁ + a₂ + a₃ + a₄ ≤ 6; preferably a₃ and a₄ are 0 and a₁ + a₂ are 1, 2, 3 or 4, more preferably 1, 2, and most preferably 1,
More preferably, the non-aromatic, aromatic, unsubstituted or substituted carbocyclic or heterocyclic group of S₂ is represented by formula (II) and wherein:
   - C¹, C²: are selected from a compound of group G¹, wherein group G¹ is selected from the group consisting of: 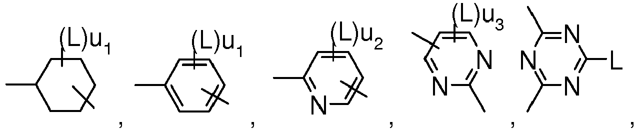 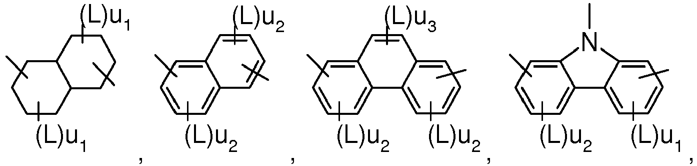 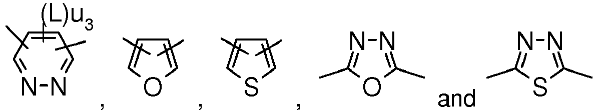
   wherein:
   "-" denotes the connecting bonds of C¹ and C² to the adjacent groups in formula (II); and
   L is -CH₃, -OCH₃, CF₃, -COCH₃, polar group, nitro, nitrile, halogen, such as fluor or chlor, CH₂=CH-, CH₂=C(CH₃)-, CH₂=CH-(CO)O-, CH₂=CH-O-, CH₂=C(CH₃)-(CO)O-, -O-, or CH₂=C(CH₃)-O-,
   u₁ is an integer from 0 to 4; and
   u₂ is an integer from 0 to 3; and
   u₃ is an integer from 0 to 2; and
   Z¹, Z², Z^{1a} Z^{2a} each independently represents -O-, -CO-, -COO-, -OCO-, -COCF₂-, -CF₂CO-, -CH₂-CH₂-, -OCH₂-, -CH₂O-, -CH=CH-, -C≡C-, -CH=CH-COO-, -OCO-CH=CH- or a single bond; with the proviso that heteroatoms are not directly linked to each other, and
   a₁, a₂, a₃, a₄ each independently represents an integer from 0 to 3, such that a₁ + a₂ + a₃ + a₃ ≤ 6; preferably a₃ is 0 and a¹ + a² ≤ 4.

Most preferred, the non-aromatic, aromatic, unsubstituted or substituted carbocyclic or heterocyclic group connected via bridging groups of S¹ is represented by formula (II) and wherein:
C¹, C² each independently represents a unsubstituted or substituted 1,4-phenylene, 2-methoxy-1,4-phenylene, 3-methoxy-1,4-phenylene, 2- trifluoromethyl-1,4-phenylene, 5-methoxy-1,4-phenylene, 2-fluor-1,4-phenylene, 3-fluor-1,4-phenylene, 5-fluor-1,4-phenylene, 2,3,5,6-tetrafluor-1,4-phenylene, 1,4-cyclohexylene or a 4,4'-biphenylene group; and
Z¹, Z², Z^{1a}, Z^{2a} each independently represents -O-, -CO-, -COO-, -OCO-, -CH₂-CH₂-, -OCH₂-, -CH₂O-, -CH=CH-, -C≡C-, -CH=CH-COO-, -OCO-CH=CH- or a single bond; and
a₁, a₂, a₃, a₄ are independently 0 or 1, preferably a3 and a4 are 0.

Especially most preferably, the non-aromatic, aromatic, unsubstituted or substituted carbocyclic or heterocyclic group connected via bridging groups of S¹ is represented by formula (II) and wherein:
C¹, C² each independently represents with at least one fluor, methoxy or trifluoromethyl substituted or unsubstituted 1,4-phenylene; and
Z¹, Z², Z^{1a}, Z^{2a} each independently represents -O-, -CO-, -COO-, -OCO-, -CH₂-CH₂-, -OCH₂-, -CH₂O-, -CH=CH-, -C≡C-, -CH=CH-COO-, -OCO-CH=CH-, or a single bond; and
a₁, a₂, a₃, a₄ are independently 0 or 1, preferably a3 and a4 are 0.

More preferred, the non-aromatic, aromatic, unsubstituted or substituted carbocyclic or heterocyclic group connected via bridging groups of S² is represented by formula (II) and wherein:
C¹, C² are selected from group G¹, with the above given meaning; and
Z¹, Z², Z^{1a}, Z^{2a} each independently represents -O-, -CO-, -COO-, -OCO-, -COCF₂-, -CF₂CO-, -CH₂-CH₂-, -OCH₂-, -CH₂O-, -CH=CH-, -C≡C-, -CH=CH-COO-, -OCO-CH=CH- or a single bond; with the proviso that heteroatoms are not directly linked to each other, and
a₁, a₂, a₃, a₄ are each independently represents an integer from 0 to 3, such that a₁ + a₂ + a₃ + a₄ ≤ 6 , and preferably a₁ + a₂ ≤ 4 and a₃ and a₄ are 0; and wherein preferably S² is linked to A via Z¹.

Most preferred the non-aromatic, aromatic, unsubstituted or substituted carbocyclic or heterocyclic group connected via bridging groups of S² is represented by formula (II) and wherein:
C¹, C² each independently represents a 1,4-phenylene which is unsubstituted or mono or poly-substituted by a halogen atom, polar group, and/or by an alkoxy, alkylcarbonyloxy or an alkyloxycarbonyl group, having form 1 to 10 carbon atoms, 1,4-cyclohexylene or a 4,4'-biphenylene group; and
Z¹, Z², Z^{1a}, Z^{2a} each independently represents -COO-, -OCO-, -CH₂-CH₂-, -OCH₂-, -CH₂O-, -CH=CH-, -C≡C-, -CH=CH-COO-, -OCO-CH=CH- or a single bond; and
a₁, a₂, a₃, a₄ are independently 0 or 1, wherein preferably S² is linked to A via Z¹

Especially most preferred, the non-aromatic, aromatic, unsubstituted or substituted carbocyclic or heterocyclic group connected via bridging groups of S² is represented by formula (III):

-(Z^{2a})_{a₄}-(Z¹-C¹)_{a₁}-(Z^{1a})_{a₃}- (III)

wherein:
- C¹: represents a non-aromatic, aromatic, unsubstituted or substituted carbocyclic or heterocyclic group, preferably selected from a compound of group G¹, and
- Z¹, Z^{1a} Z^{2a}: each independently from each other represent -COO-, -OCO-,
-OCO(C₁-C₆)alkyl, -COOCH₂(C₁-C₆)alkyl-, -CH₂-CH₂-, -OCH₂-, -CH₂O-, -CH=CH-, -C≡C-, -CH=CH-COO-, -OCO-CH=CH-, or a single bond, or a straight-chain or branched, substituted or unsubstituted C₁-C₈alkylen, wherein one or more -CH₂- group may independently from each other be replaced by a linking group, preferably by -O-, as described above;
a₁, a₃, are 1, and a4 is either 0 or 1.

Further, especially most preferred, the non-aromatic, aromatic, unsubstituted or substituted carbocyclic or heterocyclic group connected via bridging groups of S² is represented by represents formula (III) and wherein:
C¹ represents a substituted or unsubstituted 1,4-phenylene, cyclohexylene which is unsubstituted or mono or poly-substituted by a halogen atom, and/or by an alkoxy, alkylcarbonyloxy or an alkyloxycarbonyl group, having form 1 to 10 carbon atoms,
Z¹, Z^{1a}, Z^{2a} each independently from each other represent -COO-, -OCO-, -CH₂-CH₂-,-OCH₂-, -CH₂O-, -CH=CH-, -C≡C-, -CH=CH-COO-, -OCO-CH=CH-, or a single bond, or a straight-chain or branched, substituted or unsubstituted C₁-C₈alkylen, wherein one or more -C-, -CH-, -CH₂- group may independently from each other be replaced by a linking group as described above, preferably by -O-, -COO-, -OCO- , more preferred Z^{2a} is a single bond,
a₁, a₃ represents indenpendently from each other 1, a4 is 0 or 1, wherein preferably S² is linked to A via Z¹.

More preferably G is a single bond, a unsubstituted or unsubstituted non-aromatic, aromatic, unsubstituted or substituted carbocyclic or heterocyclic group or -(CH₂)ₙ₁-, -(CH₂)ₙ₁-O-(CH₂)ₙ₁-, (CH₂)ₙ₁-O(OC)-(CH₂)ₙ₁-, (CH₂)ₙ₁-(OC)O-(CH₂)ₙ₁-, (CH₂)ₙ₁-NH-(CH₂)ₙ₁-, (CH₂)ₙ₁-NH(OC)-(CH₂)ₙ₁-, -(CH₂)ₙ₁-(OC)NH-(CH₂)ₙ₁-, (CH₂)ₙ₁-S-(CH₂)ₙ₁-, (CH₂)ₙ₁-S(SC)-(CH₂)ₙ₁-, (CH₂)ₙ₁-(SC)NH-(CH₂)ₙ₁-, (CH₂)ₙ₁-NH(CS)-(CH₂)ₙ₁-, (CH₂)ₙ₁-(SC)S-(CH₂)ₙ₁-, (CH₂)ₙ₁-NHCONH-(CH₂)ₙ₁-, (CH₂)ₙ₁-NHCSNH-(CH₂)ₙ₁-, (CH₂)ₙ₁-O(CO)O-(CH₂)ₙ₁-, -(CH₂)ₙ₁-OCONH-(CH₂)ₙ₁-, -(CH₂)ₙ₁-NHOCO-(CH₂)ₙ₁-.

Most preferably G is a single bond, phenylene, substituted or unsubstituted cyclohexylen or -(CH₂)ₙ₁-, -(CH₂)ₙ₁-O(OC)-(CH₂)ₙ₁-, -(CH₂)ₙ₁-NH(CO)O-(CH₂)ₙ₁-, preferably -(CH₂)₁-,-(CH₂)₂-, -(CH₂)₅-,-(CH₂)₈-, -O(OC)-(CH₂)₆-,-O(OC)-(CH₂)₈-, -(CH₂)₃-NH(CO)O-(CH₂)₃-,
wherein n1 is independently from each other is 0, 1, 2, 3, 4, 5, 6, 7, 8, 9, 10, 11, 12 and preferably 0, 1, 2, 3, 4, 5, 6, and more preferably 0, 1, 2, 3, 4 and most preferably 0, 1 or 2.

More preferably, S₂ is a single bond, straight-chain or branched, substituted or unsubstituted C₁-C₈ alkylen, more especially C₁-C₆ alkylen, most especially C₁-C₄ alkylen within the above-given preferences; in which one or more, preferably non-adjacent, -C-, -CH-, -CH₂- group may be unreplaced or at least once replaced
- by an unsubstituted or substituted alicyclic group, preferably cyclohexylen, or an unsubstituted or substituted aromatic group, single bond, heteroatom, -O-, -CO, -arylen-, -CO-O-, -O-CO-, -O-CO-O-; and more preferably
- by an unsubstituted or substituted cyclohexylen, or an unsubstituted or substituted phenylen, single bond, -O-, -CO, -arylen-, -CO-O-, -O-CO-, -O-COO-:
with the proviso that oxygen atoms of linking groups are not directly linked to each other.

If is further encompassed by the present invention that if S₂ comprises an aromatic group, then the bondings to the remaining of the molecule can occur at any carbon atom of the aromatic ring.

The term "linking group", as used in the context of the present invention is preferably selected from an unsubstituted or substituted alicyclic group, preferably cyclohexylen, or an unsubstituted or substituted aromatic group, single bond, heteroatom, cationic carbohydrogen group such as -(C+)-, -O-, -CO, -arylen-, -CO-O-, -O-CO-, 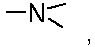 CN, -NR¹-, -NR¹-CO-, -CO-NR¹-, -NR¹-CO-O-, -O-CO-NR¹-, -NR¹-CO-NR¹-, -CH=CH-, -C≡C-, -O-CO-O-, and -Si(CH₃)₂-O-Si(CH₃)₂-, and wherein:
- R¹: represents a hydrogen atom or C₁-C₆alkyl;
with the proviso that oxygen atoms of linking groups are not directly linked to each other.

Substituents of the substituted alicyclic or aromatic group of the linking groups my be one or more and, are preferably halogene, such as fluor, chloro, bromo, iodo, and preferably fluoro and/chloro and more preferably fluor; or C₁-C₆alkoxy, such as preferably methoxy, or triflouromethyl.

In a further embodiment of the invention E preferably represents a substituted or unsubstituted phenylene, a single bond, -O-, -COO-, -OOC-, -NHCO-, -CONH-, - CONR²-, - NR²CO, -SCS, -CO-, most preferred E is -O-, -COO-, -OOC-or substituted or unsubstituted phenylene.

In a preferred embodiment W is a with A substituted phenyl ring, wherein A represents one or more halogens, H or one or more substituted or unsubstituted C₁-C₂₄ alkyls, one or more substituted or unsubstituted C₁-C₂₄ alkenyls, one or more substituted or unsubstituted C₁-C₂₄ alkynyls, or one or more carboxylic acid, wherein one or more, -C-, -CH-, -CH₂-, group may independently from each other be replaced by a heteroatom.

More preferred T is a single bond, a straight-chain C₁-C₁₆ alkyl, wherein at least one - C-, -CH-, -CH₂- or -CH₃ group is independently from each other be unreplaced or replaced by at least one heteroatom, preferably the -C-, -CH-, -CH₂- group is unreplaced or replaced by at least one heteroatom, wherein the heteroatom can be - O- or -S-; and/or by a primary, secondary, tertiary or quaternary nitrogen, such as an ammonium cation, more preferably replaced by a secondary, or tertiary amine; and/or replaced by a linking group, more preferably such linking group is a halogene, such as fluoro, chloro, bromo, iodo, and more preferably fluoro and/or chloro, and most preferably fluoro; and/or a linking group, which is preferably an unsubstituted or substituted alicyclic or aromatic group, -CH=CH-, -C≡C-, single bond, heteroatom, -O-, -CO, -CO-O-, -O-CO-, 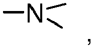 -CN, -NR¹- and wherein:
- R¹: represents a hydrogen atom or C₁-C₆alkyl;
with the proviso that oxygen atoms of linking groups are not directly linked to each other;
or/and T is a straight-chain C₁-C₁₆alkyl, wherein at least one -C-, -CH-, -CH2- or -CH3 group is independently from each other unreplaced or replaced by at least one group selected from -O-(CH2)n- , -OCO-(CH2)n-, OOC-(CH2)n-, -NH-(CH2)n-, -S-(CH2)n-, SSC-(CH2)n-, -SCS-(CH2)n-,-O-(CH2)n-O-, -O-(CH2)n-COO-, -O-(CH2)n-OCO-, OOC-(CH2)n-O-, -OCO-(CH2)n-O-, -O-(CH2)n-NH-, -NH-(CH2)n-O-, OOC-(CH2)n-NH-, -NH-(CH2)n-COO-, -OCO-(CH2)n-NH-,-OCO-(CH2)n-NH-, NH-(CH2)n-NH-, -S-(CH2)n-S-, -S-(CH2)n-CSS-, -S-(CH2)n-SCS-, SSC-(CH2)n-S-, -SCS-(CH2)n-S-, -SCS-(CH2)n-S-,-O-(CH2)n-S-,-O-(CH2)n-CSS-, -O-(CH2)n-SCS-, OOC-(CH2)n-S-, -OCO-(CH2)n-S-, -OCO-(CH2)n-S-, -S-(CH2)n-O-, -S-(CH2)n-COO-, -S-(CH2)n-OCO-, -SSC-(CH2)n-O-, -SCS-(CH2)n-O-, -SCS-(CH2)n-O-, -S-(CH2)n-NH-, -NH-(CH2)n-S-, SSC-(CH2)n-NH-, -NH-(CH2)n-CSS-,-SCS-(CH2)n-NH-, and -SCS-(CH2)n-NH- group;
wherein n is an integer from 1, 2, 3, 4, 5, 6, 7, 8, 9, 10, 11, 12 and preferably, 1, 2, 3, 4, 5, 6, and more preferably 2, 3, 4, 5, 6.

In a preferred embodiment of the invention E preferably represents a substituted or unsubstituted phenylene, a single bond, -O-, -COO-, -OOC-, -NHCO-, -CONH-,-CONR²-, - NR²CO, -SCS, -CO-, most preferred E is -O-, -COO-, -OOC-or substituted or unsubstituted phenylene.

In the context of the present invention the wording "end group" is selected from the group consisting of:
- a chemical group having a delocalisation of its electronical density and/or inducing a delocalisation of the electronical density of its neighboring atom;
- halogens, preferably fluoro, chloro, bromo or iodo, especially chloro or fluoro;
- groups containing halogen, preferably fluoro-, chloro-, bromo-, iodo-alkyl, especially fluoro-, chloro-, -alkyl, more preferably fluoro-alkyl, especially trifluormethyl;
- groups containing oxygen, preferably hydroxy, carbonyl, such as a ketone or aldehyde group, carbonate ester, carboxylate, carboxyl acid, carboxyl ester, ether, such as C₁-C₆alkoxy, acetal or ketal group, orthocarbonate ester,
- groups containing cations, anions, salts;
- groups containing nitrogene, preferably carboxamide, primary amine, secondary amine, such as di-(C₁-C₁₆alkyl)amino, tertiary amine, ammonium ion, primary ketimine, secondary ketimine, primary aldimine, secondary aldimine, aminocarbonyl, imide, azide, azo, cyanate, isocyanate, nitrate, nitrile, isonitrile, nitrosooxy, nitro, nitroso, pyridyl,
- groups containing sulfur, preferably sulfhydryl, sulfide, disulfide, sulfinyl, sulfonyl, sulfino, sulfo, thiocyanate, isothiocyanate, carbonothioyl
- groups containing phosphorus, preferably phosphino, phosphono, phosphate,
- unsubstituted or substituted, branched alkyl, wherein it may be at least one -C-, -CH-, or -CH₂- group be unreplaced or replaced by a heteroatom such as -O-, -S-, or by a primiary, secondary, tertiary or quartinary nitrogen, which is the ammonimum cation; preferably isopropyl, tert-butyl, sec-butyl, neopentyl, isopentyl;
- unsubstituted or substituted, straight-chain alkyl, wherein at least one -C-, -CH-, or-CH₂- group is replaced by a heteroatom or by a primiary, secondary, tertiary or quartinary nitrogen, which is the ammonimum cation;
- unsubstituted or substituted straight-chain or branched alkenyl, wherein one or more-C-, -CH-, -CH₂- group(s) may be independently from each other unreplaced or replaced by a linking group, and preferably wherein the -en-group is in the terminal position of the alkenyl group, especially -O-alkenyl, -OOC-alkenyl, - OCO-alkenyl, -OCNHalkenyl, -NHCOalkenyl, which is preferably alkylacryloyloxy, preferably methacryloyloxy, acryloyloxy, vinyl, vinyloxy, allyl, allyloxy;
- unsubstituted or substituted straight-chain or branched alkynyl, wherein at least one -C-, -CH-, or -CH₂- group be unreplaced or replaced by a linking group, and preferably wherein the -yl-group is in the terminal position of the alkynyl group, especially -O-alkynyl,-OOC-alkynyl, -OCO-alkynyl, -OCNHalkynyl, -NHCOalkynyl, which is preferably-Ξ-, -Ξ-CH₃, acetyl;
- unsubstituted or substituted carbocyclic or heterocyclic aromatic group or alicyclic group, incorporating preferably five, six, ten ot 14 ring atoms, e.g. furan, benzyl or phenyl, pyridinyl, pyridinium cation, pyrimidinyl, pyrimidinium cation, naphthyl, which may form ring assemblies, such as biphenylyl or triphenyl, which are uninterrupted or interrupted by at least a single heteroatom and/or at least a single bridging group; or fused polycyclic systems, such as phenanthryl, tetralinyl. Preferably aromatic group are benzyl, phenyl, biphenyl or triphenyl. More preferred aromatic groups are benzyl, phenyl and biphenyl; further
- unsubstituted or substituted alicyclic group is preferably a non-aromatic carbocyclic or heterocyclic group, wherein heterocyclic group denotes a carbocyclic group, wherein at least one -C-, -CH-, or -CH₂- group is unreplaced or replaced by a heteroatom such as -O-, -S-, or by a primiary, secondary, tertiary or quartinary nitrogen, which is the ammonimum cation; and preferably the alicyclic group is a ring system, with 3 to 30 carbon atoms, and preferably cyclopropyl, cyclobutyl, cyclopentyl, cyclopentyl, cyclohexyl, cyclohexyl, cyclohexadienyl, decalinyl, aziridinyl, oxiranyl, azrinyl, aziridium cation, oxirenyl, thiirenyl, diazirine diaziridium cation, oxaziridinyl, oxaziridium cation, dioxiranyl, azetidinyl, azetinium cation azete, azetidin cation, oxetanyl, oxetyl, thietanyl, thietyl, diazetidinyl, diazetidinium cation, dioxetanyl, dioxetyl, dithietanyl, dithietyl, oxolanyl, thiolanyl, pyrrolidinyl, pyrrolidinium cationpyrrole, thiophe, pyrrolyl, furanyl, dioxanyl, dioxolanyl, dithiolanyl, maleinimidyl, maleinamidyl, oxazolinyl, oxazolidinyl, oxazolidnium cation, oxazolyl, isooxazolyl, imidazolyl, imidazolium cation, imidazolidinyl, imidazolidinium cation, pyrazolidinyl, pyrazolidinium cation, pyrazolyl, pyrazolium cation, pyrazolinyl, thiazolidinyl, thiazolidinium cation, thiazolyl, thiazolium cation, thiazolinyl, isothiazolyl, furazanyl, oxadiazolyl, dithiazolyl, tetrazolyl, piperidinyl, a piperidium cation, a piperazium oxane, pyranyl, thianyl, thiopyranyl, piperazinyl, diazinyl, morpholinyl, oxazinyl, thiomorpholinyl, thiazinyl, dioxinyl, dioxanyl, dithianyl, dithiinyl, triazinyl, tetrazinyl, azepanyl, azepinyl, such as oxepanyl, oxepinyl, thiepanyl, thiepinyl, homopiperazinyl, diazepinyl, thiazepinyl, azocanyl, azocinyl, oxecanyl, quinolinyl, quinolinium cation, benzothiphenyl, indolyl, benzofuranyl, acridinyl, dibenzothiophenyl, carbazolyl, dibenzofuranyl; ammonium cation, selected from an imidazolium cation, a pyrazolium cation.

Preferred is in the context of the present invention the wording "end group" represents for example preferably
- halogens, preferably fluoro, chloro, bromo or iodo, especially chloro or fluoro;
- groups containing halogen, preferably fluoro-, chloro-, bromo-, iodo-alkyl, especially fluoro-, chloro-, -alkyl, more preferably fluoro-alkyl, especially trifluormethyl;
- groups containing oxygen, preferably hydroxy, carbonyl, such as a ketone or aldehyde group, carbonate ester, carboxylate, carboxyl acid, carboxyl ester, ether, such as C₁-C₆alkoxy, acetal or ketal group, orthocarbonate ester;
- groups containing nitrogene, preferably carboxamide, primary amine, secondary amine, such as di-(C₁-C₁₆alkyl)amino, tertiary amine, ammonium ion, primary ketimine, secondary ketimine, primary aldimine, secondary aldimine, aminocarbonyl, imide, azide, azo, cyanate, isocyanate, nitrate, nitrile, isonitrile, nitrosooxy, nitro, nitroso, pyridyl;
- unsubstituted or substituted straight-chain or branched alkynyl, which is preferably-Ξ-, -Ξ-CH₃, acetyl;
- unsubstituted or substituted carbocyclic or heterocyclic aromatic group or alicyclic group, incorporating preferably five, six, ten ot 14 ring atoms, e.g. furan, benzyl or phenyl, pyridinyl, pyridinium cation, pyrimidinyl, pyrimidinium cation, naphthyl, which may form ring assemblies, such as biphenylyl or triphenyl, which are uninterrupted or interrupted by at least a single heteroatom and/or at least a single bridging group; or fused polycyclic systems, such as phenanthryl, tetralinyl. Preferably aromatic group are benzyl, phenyl, biphenyl or triphenyl. More preferred aromatic groups are benzyl, phenyl and biphenyl;
More preferred are chloro or fluoro, trifluoromethyl, ether, such as C₁-C₆ alkoxy, di-(C₁-C₁₆alkyl)amino, nitrile, pyridyl, unsubstituted or substituted straight-chain or branched alkynyl, which is preferably -Ξ-, -Ξ-CH₃, acetyl; unsubstituted or substituted carbocyclic or heterocyclic aromatic group or alicyclic group, incorporating preferably five, six, ten ot 14 ring atoms, e.g. furan, benzyl or phenyl, pyridinyl, pyridinium cation, pyrimidinyl, pyrimidinium cation, naphthyl, which may form ring assemblies, such as biphenylyl or triphenyl, which are uninterrupted or interrupted by at least a single heteroatom and/or at least a single bridging group; or fused polycyclic systems, such as phenanthryl, tetralinyl. Preferably aromatic group are benzyl, phenyl, biphenyl or triphenyl. More preferred aromatic groups are benzyl, phenyl and biphenyl;
Most preferred is chloro or fluoro, trifluoromethyl, ether, such as C₁-C₆ alkoxy, di-(C₁-C₁₆alkyl)amino, nitrile, pyridyl, unsubstituted or substituted straight-chain or branched alkynyl, which is preferably -Ξ-, -Ξ-CH₃, acetyl; unsubstituted or substituted benzyl, phenyl or biphenyl; and especially preferred is nitrile.

A bridging group as used in the context of the present invention is preferably selected from -CH(OH)-, -CO-, -CH₂(CO)-, -SO-, -CH₂(SO)-, -SO₂-, -CH₂(SO₂)-, -COO-, -OCO-, -COCF₂-, -CF₂CO, -S-CO-, -CO-S-, -SOO-, -OSO-, -SOS-, -O-CO-O-, -CH₂-CH₂-, -OCH₂-, -CH₂O-, -CH=CH-, -C≡C-, -(C₁-C₆alkyl)₁₋₆C=CH-COO-, -CH=CH-COO-, -OCO-CH=CH-, -OCO-CH=C(C₁-C₆alkyl)₁₋₆CH-, -CH=N-, -C(CH₃)=N-, -N=N-, heteroatom, cationic carbohydrogen group such as -(C+)-, or a single bond; or a cyclic, straight-chain or branched, substituted or unsubstituted C₁-C₂₄alkylen, wherein one or more -C-, -CH-, -CH₂- groups may independently from each other be unreplaced or replaced by a linking group as described above.

In the context of the present invention alkyl has the meaning of unsubstituted or substituted alkyl, wherein substituted alkyl has also the meaning alkylen.

Alkyl, alkyloxy, alkoxy, alkylcarbonyloxy, acryloyloxyalkoxy, acryloyloxyalkyl, acryloyloxyalken, alkyloxycarbonyloxy, alkylacryloyloxy, methacryloyloxyalkoxy, methacryloyloxyalkyl, methacryloyloxyalken, alkylmethacryloyloxy, alkylmethacryloyloxy, alkylvinyl, alkylvinyloxy and alkylallyloxy and alkylene, as used in the context of the present invention denote with their alkyl residue, respectively their alkylene residue, a cyclic, straight-chain or branched, substituted or unsubstituted alkyl, respectively alkylene, in which one or more, preferably non-adjacent, -C-, -CH-, or -CH₂- group may be unreplaced or replaced by a linking group, preferably replaced by -O-, NH, -COO, OCO.

Further, in the context of the present invention "alkyl" is branched or straight chain, unsubstituted or substituted alkyl, preferably C₁-C₄₀ alkyl, especially C₁-C₃₀ alkyl, preferably C₁-C₂₀ alkyl, more preferably C₁-C₁₆ alkyl, most preferably C₁-C₁₀ alkyl and especially most preferably C₁-C₆ alkyl. Accordingly alkylen is for example C₁-C₄₀ alkylen, especially C₁-C₃₀ alkylen, preferably C₁-C₂₀ alkylen, more preferably C₁-C₁₆ alkylen, most preferably C₁-C₁₀alkylen and especially most preferably C₁-C₆ alkylen.

In the context of the present invention the definitions for alkyl given below, are applicable to alkylene in analogy.

C₁-C₆ alkyl is for example methyl, ethyl, propyl, isopropyl, butyl, sec.-butyl, tert.-butyl, pentyl or hexyl.

C₁-C₁₀ alkyl is for example methyl, ethyl, propyl, isopropyl, butyl, sec.-butyl, tert.-butyl, pentyl, hexyl, heptyl, octyl, nonyl, decyl.

C₁-C₁₆ alkyl is for example methyl, ethyl, propyl, isopropyl, butyl, sec.-butyl, tert.-butyl, pentyl, hexyl, heptyl, octyl, nonyl, decyl, undecyl, dodecyl, tridecyl, tetradecyl, pentadecyl or hexadecyl.

C₁-C₂₀ alkyl is for example methyl, ethyl, propyl, isopropyl, butyl, sec.-butyl, tert.-butyl, pentyl, hexyl, heptyl, octyl, nonyl, decyl, undecyl, dodecyl, tridecyl, tetradecyl, pentadecyl, hexadecyl, heptadecyl, octadecyl, nondecyl, eicosyl.

C₁-C₂₄ alkyl is for example methyl, ethyl, propyl, isopropyl, butyl, sec.-butyl, tert.-butyl, pentyl, hexyl, heptyl, octyl, nonyl, decyl, undecyl, dodecyl, tridecyl, tetradecyl, pentadecyl, hexadecyl, heptadecyl, octadecyl, nondecyl, eicosyl.

C₁-C₃₀ alkyl is for example methyl, ethyl, propyl, isopropyl, butyl, sec.-butyl, tert.-butyl, pentyl, hexyl, heptyl, octyl, nonyl, decyl, undecyl, dodecyl, tridecyl, tetradecyl, pentadecyl, hexadecyl, heptadecyl, octadecyl, nondecyl, eicosyl, heneicosyl, tricosyl, tetracosy, pentacosyl, hexacosdy, heptacosyl, octacosyl, nonacosy or triacontyl.

C₁-C₄₀ alkyl is for example methyl, ethyl, propyl, isopropyl, butyl, sec.-butyl, tert.-butyl, pentyl, hexyl, heptyl, octyl, nonyl, decyl, undecyl, dodecyl, tridecyl, tetradecyl, pentadecyl, hexadecyl, heptadecyl, octadecyl, nondecyl, eicosyl, heneicosyl, tricosyl, tetracosy, pentacosyl, hexacosdy, heptacosyl, octacosyl, nonacosy, triacontyl or tetracontyl.

C₁-C₆ alkoxy is for example methoxy, ethoxy, propoxy, isopropoxy, butoxy, sec.-butoxy, tert.-butoxy, pentoxy or hexoxy.

C₁-C₂₀ acryloyloxyalkylene, preferably C₁-C₁₀ acryloyloxyalkylene,

C₁- C₆ acryloyloxyalkylene is for example acryloyloxymethylen, acryloyloxyethylene, acryloyloxypropylene, acryloyloxyisopropylene, acryloyloxybutylene, acryloyloxy-sec.-butylene, acryloyloxypentylene, acryloyloxyhexylene, acryloyloxyheptylene, acryloyloxyoctylene, acryloyloxynonylene, acryloyloxydecylene, acryloyloxyundecylene, acryloyloxydodecane, acryloyloxytridecylene, acryloyloxytetradecylene, acryloyloxypentyldecane, acryloyloxyhexadecylene, acryloyloxyheptadecylene, acryloyloxyoctadecylene, acryloyloxynondecylene, acryloyloxyeicosylene.

C₁-C₂₀ methacryloyloxyalkylene, preferably C₁-C₁₀ methacryloyloxyalkylene,

C₁-C₆ methacryloyloxyalkylene is for example methacryloyloxymethylen, methacryloyloxyethylene, methacryloyloxypropylene, methacryloyloxyisopropylene, methacryloyloxybutylene, methacryloyloxy-sec.-butylene, methacryloyloxypentylene, methacryloyloxyhexylene, methacryloyloxyheptylene, methacryloyloxyoctylene, methacryloyloxynonylene, methacryloyloxydecylene, methacryloyloxyundecylene, methacryloyloxydodecane, methacryloyloxytridecylene, methacryloyloxytetradecylene, methacryloyloxypentyldecane, methacryloyloxyhexadecylene, methacryloyloxyheptadecylene, methacryloyloxyoctadecylene, methacryloyloxynondecylene, methacryloyloxyeicosylene.

C₁-C₂₀ acryloyloxyalkoxy, preferably C₁-C₁₀ acryloyloxyalkoxy,

C₁- C₆ acryloyloxyalkoxy is for example acryloyloxymethoxy, acryloyloxyethoxy, acryloyloxypropoxy, acryloyloxyisopropoxy, acryloyloxybutoxy, acryloyloxy-sec.-butoxy, acryloyloxypentoxy, acryloyloxyhexoxy, acryloyloxyheptoxy, acryloyloxyoctoxy, acryloyloxynonoxy, acryloyloxydecoxy, acryloyloxyundecoxy, acryloyloxydodecanoxy, acryloyloxytridecyloxy.

C₁-C₂₀ methacryloyloxyalkoxy, preferably C₁-C₁₀ methacryloyloxyalkoxy,

C₁- C₆ methacryloyloxyalkoxy is for example methacryloyloxymethoxy, methacryloyloxyethoxy, methacryloyloxypropoxy, methacryloyloxyisopropoxy, methacryloyloxybutoxy, methacryloyloxy-sec.-butoxy, methacryloyloxypentoxy, methacryloyloxyhexoxy, methacryloyloxyheptoxy, methacryloyloxyoctoxy, methacryloyloxynonoxy, methacryloyloxydecoxy, methacryloyloxyundecoxy, methacryloyloxydodecanoxy, methacryloyloxytridecyloxy.

An aliphatic group is for example a saturated or unsaturated, mono-, bi-, tri-, tetra-, penta-, hexa-, hepta-, octa-, nona-, deca-valent alkyl, alkylene, alkyloxy, alkylcarbonyloxy, acryloyloxy, alkylacryl, alkylmethacryl, alkyl(en)acryl(en), alkyl(en)methacryl(en), alkyloxycarbonyloxy, alkyloxycarbonyloxy methacryloyloxy, alkylvinyl, alkylvinyloxy or alkylallyloxy, which may comprise one or more heteroatom and/or bridging group.

An alicyclic group is preferably a non-aromatic group or unit and may be substituted or unsubstituted. Preferably an alicyclic group is a non-aromatic carbocyclic or heterocyclic group and represents for example ring systems, with 3 to 30 carbon atoms, as for example cyclopropane, cyclobutane, cyclopentane, cyclopentene, cyclohexane, cyclohexene, cyclohexadiene, decaline, tetrahydrofuran, dioxane, pyrrolidine, piperidine or a steroidal skeleton such as cholesterol. Preferred alicyclic group is cyclohexene. Substituents of an alicyclic group are halogene, preferably fluor or/and chloro, C₁-C₆ alkoxy, preferably methoxy or triflourmethyl.

The term "aromatic", as used in the context of the present invention, preferably denotes unsubstituted or substituted carbocyclic and heterocyclic groups, incorporating five, six, ten ot 14 ring atoms, e.g. furan, benzene or phenylene, pyridine, pyrimidine, naphthalenen, which may form ring assemblies, such as biphenylene or triphenylen, which are uninterrupted or interrupted by at least a single heteroatom and/or at least a single bridging group; or fused polycyclic systems, such as phenanthrene, tetraline. Preferably aromatic group are benzene, phenylene, biphenylene or triphenylen. More preferred aromatic group is benzene, phenylene and biphenylene. Especially preferred substituents of an aromatic group or of a carbocyclic and heterocyclic groups are halogene, preferably fluor or/and chloro, C₁-C₆ alkoxy, preferably methoxy or triflourmethyl.

A carbocyclic or heterocyclic aromatic group or alicyclic group incorporates preferably three, four, five, six, ten or 14 ring atoms, as for example aziridin, epoxy, cyclopropyl, furan, pyrollidin, oxazolin, imidazol, benzene, pyridine, triazine, pyrimidine, naphthalene, phenanthrene, biphenylene or tetraline units, preferably naphthalene, phenanthrene, biphenylene or phenylene, more preferably naphthalene, biphenylene or phenylene, and most preferably phenylene.

Especially preferred substituents of carbocyclic and heterocyclic aromatic groups are halogene, preferably fluor or/and chloro, C₁-C₆alkoxy, preferably methoxy or triflourmethyl.

The unsubstituted or substituted carbocyclic or heterocyclic aromatic or alicyclic group is for example unsubstituted or mono- or poly-substituted. Preferred substitutents of carbocyclic or heterocyclic aromatic groups are at least one triflourmethyl, halogen, such as fluor, chloro, bromo, iodo, especially fluor or/and cloro, and more especially fluor; hydroxyl, a polar group, acryloyloxy, alkylacryloyloxy, alkoxy, especially methoxy, ethoxy, propoxy; alkylcarbonyloxy, alkyloxycarbonyloxy, alkyloxocarbonyloxy, methacryloyloxy, vinyl, vinyloxy and/or allyloxy group, wherein the alkyl residue has preferably from 1 to 20 carbon atoms, and more preferably having from 1 to 10 carbon atoms. Preferred polar groups are nitro, nitrile or a carboxy group, and/or a cyclic, straight-chain or branched C₁-C₃₀ alkyl, which is unsubstituted, mono- or poly-substituted. Preferred substitutents of C₁-C₃₀ alkyl are methyl, fluorine and/or chlorine, wherein one or more, preferably non-adjacent, -C-, -CH-, -CH₂- group may independently of each other be replaced by a linking group. Preferably, the linking group is selected from -O-, -CO-, -COO- and/or -OCO-.

A monocyclic ring of five or six atoms is for example furan, benzene, preferably phenylene, pyridine, pyrimidine, pyridine cation, pyrimidine cation.

A bicyclic ring system of eight, nine or ten atoms is for example naphthalene, biphenylene or tetraline.

A tricyclic ring system of thirteen or fourteen atoms is for example phenanthrene.

The term "phenylene", as used in the context of the present invention, preferably denotes a 1,2-, 1,3- or 1,4-phenylene group, which is optionally substituted. Especially preferred substituents of phenylene are halogene, preferably fluor or/and chloro, C₁-C₆alkoxy, preferably methoxy or triflourmethyl. It is preferred that the phenylene group is either a 1,3- or a 1,4-phenylene group. 1,4-phenylene groups are especially preferred.

The term "halogen" denotes a chloro, fluoro, bromo or iodo substituent, preferably a chloro or fluoro substituent, and more preferably fluoro.

The term "heteroatom", as used in the context of the present invention is a neutral, anionic or cationic heteroatom and primarily denotes oxygen, sulphur and nitrogen, halogene, such as fluoro, chloro, bromo, iodo, and more preferably fluoro and/or chloro, and most preferably fluoro; preferably halogene, oxygen and nitrogen, in the latter case primary amine, secondary amine, tertiary amine or quartarnary ammonium cation, preferably in the form of -NH-.

The term "optionally substituted" as used in the context of the present invention primarily means substituted by lower alkyl, such as C₁-C₆alkyl, lower alkoxy, such as C₁-C₆alkoxy, hydroxy, halogen or by a polar group as defined above.

With respect to straight chain or branched alkyl, alkylene, alkoxy, alkylcarbonyloxy, acryloyloxyalkoxy, acryloyloxyalkyl, acryloyloxyalkene, alkyloxycarbonyloxy, alkylacryloyloxy, methacryloyloxyalkoxy, methacryloyloxyalkyl, methacryloyloxyalkene, alkylmethacryloyloxy, alkylmethacryloyloxy, alkylvinyl, alkylvinyloxy, alkylallyloxy and alkylene groups it is repeatedly pointed out that some or several of the -C-, -CH-, -CH₂- groups may be replaced e.g. by heteroatoms, but also by other groups, preferably bridging groups. In such cases it is generally preferred that such replacement groups are not directly linked to each other. It is alternatively preferred that heteroatoms, and in particular oxygen atoms are not directly linked to each other.

The first object of the inventions are compositions comprising a photoalignable material polymers comprising or deriving from the siloxane monomer of formula (IV) 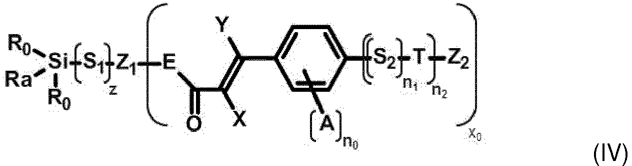 wherein,
Rₐ represents OH, Cl, substituted or unsubstituted alkoxyl group having 1 to 20 carbons, alkyl group having 1 to 20 carbons, or aryl group having 1 to 20 carbons;
S1 represents a substituted or unsubstituted C₁-C₂₄ straight chain alkyl;
z is an integer from 0 to 15;
Z₁ represents a substituted or unsubstituted alicyclic group of C₅ to C₆.
n₀ is an integer from 0 to 4;
n₁ is an integer from 0 to 15;
n₂ is an integer from 1 to 15;
x₀ is an integer from 1 to 2;
X, Y are H;
S₂ represents a cyclic, aromatic, straight-chain or branched, substituted or unsubstituted C₁-C₂₄ alkylen in which one or more -C-, -CH-, -CH₂- groups may be replaced by a linking group;
E represents O, S, NH. A represents halogen, H or substituted or unsubstituted C₁-C₂₄ alkyl, a substituted or unsubstituted C₁-C₂₄ alkenyl, a substituted or unsubstituted C₁-C₂₄ alkynyl, or a carboxylic acid, wherein one or more, -C-, -CH-, -CH₂-, group may independently from each other be replaced by a heteroatom; preferably A is halogen, H, or a C₁-C₂₄ alkoxy or a carboxylic acid; most preferably A is H, F, methoxy or a carboxylic acid;
R₀ represents OH, Cl, a linear or branched, substituted or unsubstituted alkoxyl group having 1 to 20 carbons, in which a -C-, -CH-, -CH₂- could be replaced by unsubstituted or substituted C₆-C₂₀ aryl group;
Z₂ is CN;
T represents an unsubstituted or substituted, straight-chain C₁-C₁₆ alkyl;
and an additive selected from the group consisting of acid generators, base generators, acids and bases.

In a preferred embodiment, the first aspect of the invention relates to composition comprising a photoalignable material comprising or deriving from the siloxane monomer of formula (IV): 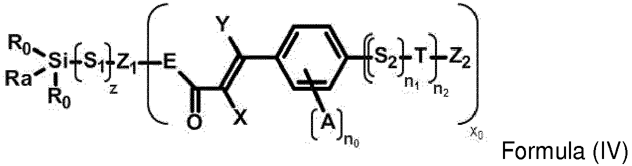 wherein
Ra, z, n₀, n₁, n₂, x₀, S₂, R₁, T are as described above; and
A represents H, one or more halogens, one or more methoxy groups or one or more carboxylic groups;
Z₁ represents a substituted or unsubstituted C₅-C₆ alicyclic group;
S₁ represents a substituted or unsubstituted C₁-C₂₄ straight chain alkyl;
E represents O, or S or NH;
X, Y are H; and
Z₂ is CN;
and an additive selected from the group consisting of acid generators, base generators, acids and bases.

In another preferred embodiment, the first aspect of the invention relates a composition comprising a photoalignable material comprising or deriving from a siloxane monomer of formula (IV):

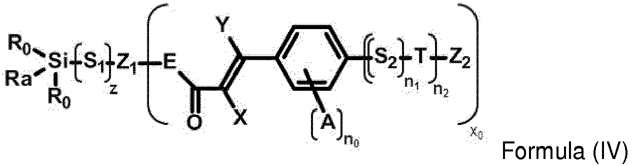

Wherein
Ra, z, n₀, n₁, n₂, x₀, S₂, R₁, T are as described above; and
A represents H, one or more halogens, one or more methoxy groups or one or more carboxylic groups;
Z₁ represents a substituted or unsubstituted C₅-C₆ alicyclic group;
S₁ represents a substituted or unsubstituted C₁-C₂₄ straight chain alkyl;
E represents O;
X, Y are H; and
Z₂ is CN;
and an additive selected from the group consisting of acid generators, base generators, acids and bases.

In a further preferred embodiment the first aspect of the invention relates to a composition comprising a photo-alignable material comprising or deriving from a monomer of formula (IV):

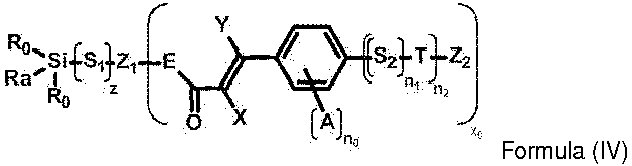

Wherein:
Ra, z, n₀, n₁, n₂, x₀, S₂, R₁, Z₂, B are as described above; and
A represents H, one or more halogens, one or more methoxy groups or one or more carboxylic groups;
Z₁ is a substituted or unsubstituted cyclohexanol group or a substituted or unsubstituted cyclohexanether group;
S₁ is ethyl group;
E is O;
X, Y are H; and
Z₂ is CN;
and an additive selected from the group consisting of acid generators, base generators, acids and bases.

The additive is selected from the group consisting of acid generators, base generators, acids and bases.

Examples of acid generators in the context of the present invention are onium salt acid generators and onium salt photo-initiators. Exemplary onium salt photo-initiators include diaryl iodonium salts, triaryl sulfonium salts, monoaryl dialkyl sulfonium salts, triaryl selenonium salts, tetraaryl phosphonium salts, aryl diazonium salts, triazine photo-acid generators, sulfonate photo-acid generators and disulfone photo-acid generators.

Examples of diaryl iodonium salts include but are not limited to diphenyliodonium salt, di-p-tolyliodonium salt, bis(4-dodecylphenyl)iodonium salt, bis(4-methoxyphenyl)iodonium salt, (4-octyloxyphenyl)phenyliodonium salt, bis(4-decyloxy)phenyliodonium salt, 4-(2-hydroxytetradecyloxy)phenylphenyliodonium salt, 4-isopropylphenyl(p-tolyl)iodonium salt, 4-isobutylphenyl(p-tolyl)iodonium salt, 4-methylphenyl)[4(2-methylpropyl)phenyl]-, hexafluorophosphate(1-) (Irgacure 250 from BASF), 4-methoxyphenylphenyliodonium trifluoromethanesulfonate, bis(4-tert-butylphenyl)iodonium trifluoromethanesulfonate diphenyliodonium tetrafluoroborate; di(4-methylphenyl)iodonium tetrafluoroborate; phenyl-4-methylphenyliodonium tetrafluoroborate; Bis(4-*tert*-butylphenyl)iodonium Hexafluorophosphate, Diphenyliodonium Trifluoromethanesulfonate, 4-Isopropyl-4'-methyldiphenyliodonium tetrakis(pentafluorophenyl)borate, bis(4-fluorophenyl)iodonium triflate, (2-Bromophenyl)(2,4,6-trimethylphenyl)iodonium triflate, [3-(Trifluoromethyl)phenyl](2,4,6-trimethylphenyl)iodonium, Phenyl[3-(trifluoromethyl)phenyl]iodonium triflate, (4-Nitrophenyl)(2,4,6-trimethylphenyl)iodonium triflate, (4-Nitrophenyl)(2,4,6-trimethylphenyl)iodonium triflate, di(4-heptylphenyl)iodonium tetrafluoroborate; di(3-nitrophenyl)iodonium hexafluorophosphate; di(4-chlorophenyl)iodonium hexafluorophosphate; di(naphthyl)iodonium tetrafluoroborate; di(4-trifluoromethylphenyl)iodonium tetrafluoroborate; diphenyliodonium hexafluorophosphate; di(4-methylphenyl)iodonium hexafluorophosphate; diphenyliodonium hexafluoroarsenate; di(4-phenoxyphenyl)iodonium tetrafluoroborate; phenyl-2-thienyliodonium hexafluorophosphate; 3,5-dimethylpyrazolyl-4-phenyliodonium hexafluorophosphate; diphenyliodonium hexafluoroantimonate; di(2,4-dichlorophenyl)iodonium hexafluorophosphate; di(4-bromophenyl)iodonium hexafluorophosphate; di(4-methoxyphenyl)iodonium hexafluorophosphate; di(3-carboxyphenyl)iodonium hexafluorophosphate; di(3-methoxycarbonylphenyl)iodonium hexafluorophosphate; di(3-methoxysulfonylphenyl)iodonium hexafluorophosphate; di(4-acetamidophenyl)iodonium hexafluorophosphate; di(2-benzothienyl)iodonium hexafluorophosphate; bis(4-*tert*-butylphenyl)iodonium perfluoro-1-butanesulfonate, and diphenyliodonium hexafluoroantimonate.

Examples of sulfonium compounds include but are not limited to triphenylsulfonium trifluoromethanesulfonate, tri(4-methylphenyl)sulfonium trifluoromethanesulfonate, 2,4,6-trimethylphenyldiphenylsulfonium trifluoromethanesulfonate, 1-(2-naphtholylmethyl)thoranium trifluoromethanesulfonate, 4-hydroxy-1-naphthyldimethylsulfonium trifluoromethanesulfonate, cyclohexylmethyl(2-oxocyclohexyl)sulfonium trifluoromethanesulfonate, tri-p-tolylsulfonium salt, 4-(phenylthio)phenyldiphenylsulfonium salt, 4-(4-benzoyl-2-chlorophenylthio)phenylbis(4-fluorophenyl)sulfonium salt, 7-isopropyl-9-oxo-10-thia-9,10-dihydroanthran-2-yldi-p-tolylsulfonium salt, 7-isopropyl-9-oxo-10-thia-9,10-dihydroanthracen-2-yldiphenylsulfonium salt, 2-[(diphenyl)sulfonio]thioxanthone, 4-[4-(4-tert-butylbenzoyl)phenylthio]phenyldi-p-tolylsulfonium salt, 4-(4-benzoylphenylthio)phenyldiphenylsulfonium salt, diphenylphenacylsulfonium salt, 4-hydroxyphenylmethylbenzylsulfonium salt, 2-naphthylmethyl(1-ethoxycarbonyl)ethylsulfonium salt, 4-hydroxyphenylmethylphenacylsulfonium salt, phenyl[4-(4-biphenylthio)phenyl]-4-biphenylsulfonium salt, phenyl[4-(4-biphenylthio)phenyl]-3-biphenylsulfonium salt, [4-(4-acetophenylthio)phenyl]diphenylsulfonium salt, octadecylmethylphenacylsulfonium salt, 4-(phenylthio)phenyldiphenylsulfonium salt, 4-(4-benzoyl-2-chlorophenylthio)phenylbis(4-fluorophenyl)sulfoniumsalt, 4-(4-benzoylphenylthio)phenyldiphenylsulfonium salt, phenyl[4-(4-biphenylthio)phenyl]-4-biphenylsulfonium salt, phenyl[4-(4-biphenylthio)phenyl]-3-biphenylsulfonium salt, and diphenyl[4-(p-terphenylthio)phenyl]diphenylsulfonium salt, triphenylsulfonium tetrafluoroborate, methyldiphenylsulfonium tetrafluoroborate, dimethylphenylsulfonium hexafluorophosphate, triphenylsulfonium hexafluorophosphate, triphenylsulfonium hexafluoroantimonate, diphenylnaphthylsulfonium hexafluoroarsenate, tritolysulfonium hexafluorophosphate, anisyldiphenylsulfonium hexafluoroantimonate, 4-butoxyphenyldiphenylsulfonium tetrafluoroborate, 9-[4-(2-Hydroxyethoxy)phenyl]thianthrenium hexafluorophosphate, 4-chlorophenyldiphenylsulfonium hexafluorophosphate, tri(4-phenoxyphenyl)sulfonium hexafluorophosphate, di(4-ethoxyphenyl)methylsulfonium hexafluoroarsenate, 4-acetonylphenyldiphenylsulfonium tetrafluoroborate, 4-thiomethoxyphenyldiphenylsulfonium hexafluorophosphate, di(methoxysulfonylphenyl)methylsulfonium hexafluoroantimonate, di(nitrophenyl)phenylsulfonium hexafluoroantimonate, di(carbomethoxyphenyl)methylsulfonium hexafluorophosphate, 4-acetamidophenyldiphenylsulfonium tetrafluoroborate, dimethylnaphthylsulfonium hexafluorophosphate, trifluoromethyldiphenylsulfonium tetrafluoroborate, p-(phenylthiophenyl)diphenylsulfonium hexafluoroantimonate

Examples of diazonium compounds include but are not limited to diazonium salts, 2-chloro-4-(dimethylamino)-5-methoxybenzenediazonium, 4-n-phenyl-amino-2-methoxyphenyl diazonium sulfate, 4-n-phenyl-amino-2-methoxy-phenyl diazonium p-ethyl phenyl sulfates, 4-n-phenylamino-2-methoxy-phenyl diazonium 2-naphthylsulfate, 4-n-phenyl-amino-2-methoxy-phenyl diazonium phenyl sulfates, 2,5-diethoxy-4-n-4'-methoxyphenyl carbonyl phenyl diazonium-3-carboxy-4-hydroxy-phenyl sulfates, 2-methoxy-4-n-phenyl diazonium-3-carboxy-4-hydroxy-phenyl sulfates, 4-Nitrobenzenediazonium Tetrafluoroborate.

Examples of triazine compounds include but are not limited to trichloromethyl-S-triazine compound as 2-methyl-4,6-bis(trichloromethyl)-1,3,5-triazine, 2,4,6-tris(trichloromethyl)-1,3,5-triazine, 2-phenyl-4,6-bis(trichloromethyl)-1,3,5-triazine, 2-(4-methoxyphenyl)-4,6-bis(trichloromethyl)-1,3,5-triazine, 2-(4-methoxystyryl)-4,6-bis(trichloromethyl)-1,3,5-triazine, 2-(2,4-dimethoxystyryl)-4,6-bis(trichloromethyl)-1,3,5-triazine, 2-(2-methoxystyryl)-4,6-bis(trichloromethyl)-1,3,5-triazine, 2-[2-(Furan-2-yl)vinyl]-4,6-bis(trichloromethyl)-1,3,5-triazine

Examples of sulfonate compounds include but are not limited to -benzoyl-1-phenylmethyl p-toluenesulfonate, 2-benzoyl-2-hydroxy-2-phenylethyl p-toluenesulfonate, 1,2,3-benzene-triyl-tris(methanesulfonate), 2-dinitrobenzyl p-toluenesulfonate, or 4-nitrobenzyl p-toluenesulfonate, 2-Phenyl-2-(p-toluenesulfonyloxy)acetophenone.

Base generators include for example carbamate type, an α-aminoketone, a quaternary ammonium type as quaternary ammonium tetraphenyl borates salt, an o-acyloxime type as O-phenylacetyl 2-acetonaphthone oxime, sulfone amide, nifedipines, aromatic sulfonamides. Examples of base generators are 2-(9-Oxoxanthen-2-yl)propionic Acid 1,5,7-Triazabicyclo[4.4.0]dec-5-ene Salt, Acetophenone O-Benzoyloxime, 2-nitrobenzylcarbamate, nitrobenzylcyclohexylcarbamate, 3,5-dimethoxybenzylcyclohexylcarbamate, 1,2-Bis(4-methoxyphenyl)-2-oxoethyl Cyclohexylcarbamate, 3-nitrophenylcyclohexylcarbamate, benzylcyclohexylcarbamate, [[(2-nitrobenzyl)oxy]carbonyl]octylamine, [[(2-nitrobenzyl)oxy]carbonyl]cyclohexylamine, [[(2-nitrobenzyl)oxy]carbonyl]piperazine, bis[[(2-nitrobenzyl)oxy]carbonyl]hexane-1,6-diamine, [[(2,6-dinitrobenzyl)oxy]carbonyl]cyclohexylamine, bis[[(2,6-dinitrobenzyl)oxy]carbonyl]hexane-1,6-diamine, N-[[(2-nitrophenyl)-1-methylmethoxy]carbonyl]cyclohexylamine, N-[[(2-nitrophenyl)-1-methylmethoxy]carbonyl]-octadecylamine, bis[[(α-methyl-2-nitrobenzyl)oxy]carbonyl]hexane, 1,6-diamine, N-[[(2,6-dinitrophenyl)-1-methylmethoxy]carbonyl]cyclohexylamine, N-[[(2-nitrophenyl)-1-(2'-nitrophenyl)methoxy]carbonyl]cyclohexyl amine, N-substituted 4-(o-nitrophenyl)dihydroxypyridines, N-(2-nitrobenzyloxycarbonyl)piperidine, 1,3-bis(N-(2-nitrobenzyloxycarbonyl)-4-piperidyl]propane, N,N'-bis(2-nitrobenzyloxycarbonyl)dihexylamine, and O-benzylcarbonyl-N-(1-phenylethylidene)hydroxylamine, N-[[(2,6-dinitrophenyl)-1-(2',6'-dinitrophenyl)methoxy]carbonyl]cyclohexylamine, N-cyclohexyl-4-methylphenylsulfonamide, N-cyclohexyl-2-naphthylsulfonamide, o-phenylacetyl-2-acetonaphthonoxim, and N-methylnifedipine, but are not limited thereto.

Base generators include aminoketone having a group C₆H₅CH₂OCONH-, as for example -Methyl-1 [4-(methylthio)phenyl]-2-morpholinopropan-1 -one or alkylaminocetophenone

Example of acids in the context of the present invention include Bronsted acids such as sulfuric acid, hydrochloric acid, nitric acid, phosphoric acid, hydrofluoric acid, formic acid, acetic acid, propionic acid, butanoic acid, pentanoic acid, hexanoic acid, monochloroacetic acid, dichloroacetic acid, trichloroacetic acid, trifluoroacetic acid, oxalic acid, malonic acid, sulfonic acid, phthalic acid, fumaric acid, citric acid, maleic acid, oleic acid, methylmalonic acid,, p-aminobenzoic acid, methanesulfonic acid, paratoluenesulfonic acid, dodecylbenzenesulfonic acid, trifluoromethanesulfonic acid, acetic acid and trifluoroacetic acid; and Lewis acids such as aluminum trichloride, boron trifluoride, titanium tetrarchloride, iron (III) chloride, zinc chloride, tin chloride, trialkylaluminum, zinc octanoate, tin octanoate, dibutyltin dilaurate, aluminum (III) acetylacetonate and dibutyltin dimethoxide. It is also possible to combine the Bronsted and the Lewis acids.

Examples of the bases in the context of the present invention include metal hydroxides such as lithium hydroxide, sodium hydroxide and potassium dydroxide, alyl metals such al butyllithium, metal alkoxide ausch as sodium methoxide and potassium methoxide, metal silanolates ausch as sodium silanolate, potassium silanolate and lithium silanotale, primary, secondary and tertiary amines such as trimethylamine, ethylene diamine, diethylene triamine, 1,8-diazabicyclo[5.4.0]undec-7-ene and 1,4-diazabicyclo[2.2.2]octane, and phosphines such as tryphenyl phospine, tri(4-methoxyphenyl)phosphine and tributyl phosphine.

The composition according to the present invention may contain also other additives. The additive is selected from the group consisting of: nucleating agents, clarifying agents, antistatics, antioxidants, slip agents, silica, talc, stabilizers, UV stabilizers, lubricants, coupling agents, antimicrobial agents, crosslinking agents, surfactants, photo-active agents, photo-sensitizers, photo generators, in particular cationic photo-generators. Additives such as silane-containing compounds and epoxy-containing crosslinking agents may be added. Suitable silane-containing additives are described in Plast. Eng. 36 (1996), (Polyimides, fundamentals and applications), Marcel Dekker, Inc. Suitable epoxy-containing cross-linking additives include 4,4'-methylene-bis-(N,N-diglycidylaniline), trimethylolpropane triglycidyl ether, benzene-1,2,4,5-tetracarboxylic acid 1,2,4,5-N,N'-diglycidyldiimide, polyethylene glycol diglycidyl ether, N,N-diglycidylcyclohexylamine and the like. Other suitable additives include 2,2-dimethoxyphenylethanone, a mixture of diphenylmethanone and N,N-dimethylbenzenamine or ethyl 4-(dimethylamino)benzoate, 1-Hydroxy-cyclohexyl-phenyl-ketone, 2-Benzyl-2-dimethylamino-1-(4-morpholinophenyl)-butanone-1, Irgacure®500 (1:1 mixture by weight of 1-Hydroxy-cyclohexyl-phenyl-ketone and benzophenone), 2,2-Dimethoxy-1,2-diphenylethan-1-one or Michler's ketone.

The compositions according to definition and preferences of the invention, optionally further comprise an organic solvent. Example of organic solvents are chlorobenzene, pyrrolidone solvents, preferably, N-methyl-2- pyrrolidone, N-ethyl-2-pyrrolidone, N-cyclohexyl-2-pyrrolidone; imidazolidinone, dimethylsulfoxide, dimethylformamide, toluene, chloroform, organic ester, such as acetyl acetic ester or butyl acetic ester, pentyl acetic ester, hexyl acetic ester; further Y-butyrolactone, methyl cellosolve, butyl cellosolve, butyl carbitol, tetrahydrofuran, ditehylene glycol diethylether, dipentylether dipropylene glycol dimethylether, diisobutyl ketone momoethylene glycol dimethyl ether, etc. These solvents can be used alone or in mixtures thereof.

In the context of the present invention, a copolymer is defined as a polymer comprising at least two different types of monomers, wherein the first monomer is a compound of formula (I) and the at least second monomer is different from the first one.

In a preferred embodiment of the invention the copolymer comprising a first monomer of formula (I) and a second monomer as described in WO2014/191292, which comprises a cyanostilbene group.

In a second embodiment the invention relates to compositions comprising a photo-alignable material and an additive as described above and a second polymer which is different from the first one.

The second polymer of the second embodiment of the present invention is a polymer selected from the group consisting of: polyamic acids, polyamic esters, polyimides, polymerizable liquid crystals, polymerized liquid crystals (LCP), polysiloxanes, polyacrylate, polymethacrylate, polyacrylamide, polymethacrylamide, polyvinylether, polyvinylester, polyallylether, polyallylester, polystyrene, polyamidimide, polymaleic acid, polyfumaric acid, polyurethane and derivatives thereof, polystyrol, polyester, polyurethane, polyethylene, polypropylen, polyvinylchloride, polytetrafluoroethylen, polycarbonate, polysilane, polymaleinimide, polynorbornene, polyterephthalate, polycyanostilbenes and dendrimere.

More preferred is polyamic acid or polyimide. Most preferred is polyamic acid.

More preferably the polymerizable liquid crystal or the polymerized liquid crystal contains a polar group.

More preferably the second polymer is selected from the group consisting of polyacrylate, polymethacrylate, polyacrylamide, polymethacrylamide, polyvinylether, polyvinylester, polyallylether, polyallylester, polystyrene, polysiloxane, polyamidimide, polymaleic acid, polyfumaric acid, polyurethane and derivatives thereof, polystyrol, polyester, polyurethane, polyethylene, poylpopylen, polyvinylchloride, polytetrafluoroethylen, polycabonate, polysilane, polymaleinimide, polynorbornene, polyterephthalate and dendrimere.

The term "diamine" or "diamine compound" is to be understood as designating a chemical structure which has at least two amino groups, i.e. which may also have 3 or more amino groups.

If the second polymer is a diamine, the diamine represents an optionally substituted aliphatic, aromatic or alicyclic diamino group having from 1 to 40 carbon atoms and preferably made from or selected from the following group of structures: aniline, p-phenylenediamine, m-phenylenediamine, benzidine, diaminofluorene, or their derivatives, with the proviso that compounds listed which do not carry two amino groups are taken as derivatives with at least one additional amino group, and more preferably made from or selected from the following commercially available amino compounds (example of suppliers: Aldrich, ABCR, ACROS, Fluka) which can also be used as comonomers:
4-amino-2,3,5,6-tetrafluorobenzoic acid
4-amino-3,5-diiodobenzoic acid, 3,4-diaminobenzoic acid
4-amino-3-methylbenzoic acid,
4-amino-2-chlorobenzoic acid
4-aminosalicylic acid
4-aminobenzoic acid
4-aminophthalic acid
1-(4-aminophenyl)ethanol
4-aminobenzyl alcohol
4-amino-3-methoxybenzoic acid
4-aminophenyl ethyl carbinol
4-amino-3-nitrobenzoic acid
4-amino-3,5-dinitrobenzoic acid
4-amino-3,5-dichlorobenzoic acid
4-amino-3-hydroxybenzoic acid
4-aminobenzyl alcohol hydrochloride
4-aminobenzoic acid hydrochloride
pararosaniline base
4-amino-5-chloro-2-methoxybenzoic acid
4-(hexafluoro-2-hydroxyisopropyl)aniline
piperazine-p-amino benzoate
4-amino-3,5-dibromobenzoic acid
isonicotinic acid hydrazide p-aminosalicylate salt
4-amino-3,5-diiodosalicylic acid
4-amino-2-methoxybenzoic acid
2-[2-(4-aminophenyl)-2-hydroxy-1-(hydroxymethyl)ethyl]isoindoline-1,3-dione
4-amino-2-nitrobenzoic acid
2,4-diaminobenzoic acid
p-aminobenzoic acid,
[3,5-3h]-4-amino-2-methoxybenzoic acid
L-(+)-threo-2-amino-1-(4-aminophenyl)-1,3-propanediol
L-(+)-threo-2-(N,N-dimethylamino)-1-(4-aminophenyl)-1,3-propanediol
ethyl 2-(4-aminophenyl)-3,3,3-trifluoro-2-hydroxypropanoate
ethyl 2-(4-amino-3-methylphenyl)-3,3,3-trifluoro-2-hydroxypropanoate
ethyl 2-(4-amino-3-methoxyphenyl)-3,3,3-trifluoro-2-hydroxypropanoate
3,4-diaminobenzyl alcohol dihydrochloride
4-aminonaphthalene-1,8-dicarboxylic acid
4-amino-3-chloro-5-methylbenzoic acid
4-amino-2,6-dimethylbenzoic acid
4-amino-3-fluorobenzoic acid
4-amino-5-bromo-2-methoxybenzenecarboxylic acid
2,7-diaminofluorene
4,4'-diaminooctafluorobiphenyl
3,3'-diaminobenzidine
3,3',5,5'-tetramethylbenzidine
3,3'-dimethoxybenzidine
o-tolidine
3,3'-dinitrobenzidine
2-nitrobenzidine
3,3'-dihydroxybenzidine
o-tolidine sulfone
benzidine,
3,3'-dichlorobenzidine
2,2',5,5'-tetrachlorobenzidine,
benzidine-3,3'-dicarboxylic acid
4,4'-diamino-1,1'-binaphthyl
4,4'-diaminodiphenyl-3,3'-diglycolic acid
dihydroethidium
o-dianisidine
2,2'-dichloro-5,5'-dimethoxybenzidine
3-methoxybenzidine
3,3'-dichlorobenzidine (diphenyl-d6),
2,7-diamino-9-fluorenone
3,5,3',5'-tetrabromo-biphenyl-4,4'-diamine
2,2'-bis(trifluoromethyl)benzidine
2,2'-dichloro[1,1'-biphenyl]- 4,4'-diamine
3,9-diamino-1,11-dimethyl-5,7-dihydro-dibenzo(a,c)cyclohepten-6-one
3,3'-bis(trifluoromethyl)benzidine
dibenzo(1,2)dithiine-3,8-diamine
3,3'-tolidine-5-sulfonic acid
3,3'-dichlorobenzidine-d6
tetramethylbenzidine
3,3'-diaminobenzophenone, 3,3'-diaminodiphenylmethane,
4,4-bis-(3-amino-4-hydroxyphenyl)-valeric acid
2,2-bis(3-amino-4-hydroxyphenyl)hexafluoropropane
2,2-bis(3-amino-4-methylphenyl)hexafluoropropane
tetrabromo methylenedianiline
2,7-diamino-9-fluorenone
2,2-bis(3-aminophenyl)hexafluoropropane
bis-(3-amino-4-chloro-phenyl)-methanone
bis-(3-amino-4-dimethylamino-phenyl)-methanone
3-[3-amino-5-(trifluoromethyl)benzyl]-5-(trifluoromethyl)aniline
1,5-diaminonaphthalene
or their derivatives, again with the proviso that compounds listed which do not carry two amino groups are taken as derivatives with at least one additional amino group.

Preferred examples of additional other diamines are:
ethylenediamine, 1,3-propylenediamine, 1,4-butylenediamine, 1,5-pentylenediamine, 1,6-hexylenediamine, 1,7-heptylenediamine, 1,8-octylenediamine, 1,9-nonylenediamine, 1,10-decylenediamine, 1,11-undecylenediamine, 1,12-dodecylenediamine, α,α'-diamino-m-xylene, α,α'-diamino-p-xylene, (5-amino-2,2,4-trimethylcyclopentyl)methylamine, 1,2-diaminocyclohexane, 4,4'-diaminodicyclohexylmethane, 1,3-bis(methylamino)cyclohexane, 4,9-dioxadodecane-1,12-diamine, 3,5-diaminobenzoic acid methyl ester, 3,5-diaminobenzoic acid hexyl ester, 3,5-diaminobenzoic acid dodecyl ester, 3,5-diaminobenzoic acid isopropyl ester, 4,4'-methylenedianiline, 4,4'-ethylenedianiline, 4,4'-diamino-3,3'-dimethyldiphenylmethane, 3,3',5,5'-tetramethylbenzidine, 4,4'-diaminodiphenyl sulfone, 4,4'-diaminodiphenyl ether, 1,5-diaminonaphthalene,3,3'-dimethyl-4,4'-diaminobiphenyl, 3,4'-diaminodiphenyl ether, 3,3'-diaminobenzophenone, 4,4'-diaminobenzophenone, 4,4'-diamino-2,2'-dimethylbibenzyl, bis[4-(4-aminophenoxy)phenyl] sulfone, 1,4-bis(4-aminophenoxy)benzene, 1,3-bis(4-aminophenoxy)benzene, 1,3-bis(3-aminophenoxy)benzene, 2,7-diaminofluorene, 9,9-bis(4-aminophenyl)fluorene, 4,4'-methylenebis(2-chloroaniline), 4,4'-bis(4-aminophenoxy)biphenyl, 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 4,4'-(1,4-phenyleneisopropylidene)bisaniline, 4,4'-(1,3-phenyleneisopropylidene)bisaniline, 2,2-bis[4-(4-aminophenoxy)phenyl]propane, 2,2-bis[3-(4-aminophenoxy)phenyl]hexafluoropropane, 2,2-bis[3-amino-4-methylphenyl]hexafluoropropane, 2,2-bis(4-aminophenyl)hexafluoropropane, 2,2'-bis[4-(4-amino-2-trifluoromethylphenoxy)phenyl]hexafluoropropane, 4,4'-diamino-2,2'-bis(trifluoromethyl)biphenyl, and 4,4'-bis[(4-amino-2-trifluoromethyl)phenoxy]-2,3,5,6,2',3',5',6'-octafluorobiphenyl; as well as diamines disclosed in US 6,340,506, WO 00/59966 and WO 01/53384.

The diamine compounds according to the present invention may be prepared using methods that are known to a person skilled in the art.

In addition, preferred diamines are the commercially available ones listed below:
Polymers:
   Poly(3,3',4,4'-benzophenonetetracarboxylic dianhydride-*co*-4,4'-oxydianiline/1,3-phenylenediamine), amic acid solution
   Poly(3,3',4,4'-benzophenonetetracarboxylic dianhydride-*co*-4,4'-oxydianiline/1,3-phenylenediamine), amic acid solution
   Poly(pyromellitic dianhydride-co-4,4'-oxydianiline), amic acid solution
Aromatic diamine
   2,7-diaminofluorene
   1,5-diaminoanthraquinone
   2,6-diaminoanthraquinone
   pararosaniline hydrochloride
   3,6-acridinediamine
   4,4'-diaminooctafluorobiphenyl
   2,2'-dithiodianiline
   3,3',5,5'-tetramethylbenzidine
   3,3'-diaminodiphenyl sulfone
   4,4'-diamino-2,2'-dimethylbibenzyl
   4,4'-diaminodiphenyl ether
   4,4'-dithiodianiline
   4,4'-diaminodiphenyl sulfone
   4,4'-diaminodiphenylmethane
   4,4'-ethylenedianiline
   3,3'-dimethoxybenzidine
   2,2'-dithiobis(1-naphthylamine)
   3,7-diamino-2-methoxyfluorene
   3,6-diamino-10-methylacridinium chloride
   propidium iodide
   o-dianisidine dihydrochloride
   2,7-diaminofluorene dihydrochloride
   pararosaniline acetate
   3,6-diamino-10-methylacridinium chloride hydrochloride
   proflavine dihydrochloride
   o-tolidine dihydrochloride
   3,3',5,5'-tetramethylbenzidine dihydrochloride
   3,3'-diaminobenzidine tetrahydrochloride
   4,4'-diaminostilbene dihydrochloride
   4,4'-diaminodiphenylamine sulfate
   proflavine hemisulfate
   2,2'-ethylenedianiline diphosphate
   1,5-diamino-4,8-dihydroxyanthraquinone
   o-tolidine
   3,3'-diaminobenzophenone
   3,3'-diaminodiphenylmethane
   3,4'-diaminodiphenylmethane
   2,2-bis[4-(4-aminophenoxy)phenyl]hexafluoropropane
   4,4'-diamino-1,1'-dianthramide
   3,3'-dinitrobenzidine
   4,4'-diamino-5,5'-dimethyl-2,2'-biphenyldisulfonic acid
   4,4'-diaminostilbene-2,2'-disulfonic acid
   3-amino-4-hydroxyphenyl sulfone
   4,4-bis-(3-amino-4-hydroxyphenyl)-valeric acid
   2,2'-diamino-4,4'-difluorobibenzyl
   2-amino-4-chlorophenyl disulfide
   3,3'-(decamethylenedioxy)dianiline
   3,3'-(pentamethylenedioxy)dianiline
   4-(p-aminoanilino)-3-sulfoaniline
   4-[3-(4-aminophenoxy)propoxy]aniline
   2-nitrobenzidine
   benzidine-3-sulfonic acid
   4,4'-diaminodiphenyl sulfide
   4,4'-diaminobenzanilide
   n,n'-bis(3-aminophenylsulfonyl)ethylenediamine
   2,2'-biphenyldiamine
   3,4'-diaminodiphenyl ether
   proflavine hemisulphate
   phenosafranin
   4,4'-diaminobenzophenone
   2,2-bis(4-aminophenyl)hexafluoropropane
   2,2-bis(3-amino-4-hydroxyphenyl)hexafluoropropane
   2,2-bis(3-amino-4-methylphenyl)hexafluoropropane
   3,3'-dihydroxybenzidine
   3,3'-diamino-4,4'-dihydroxybiphenyl
   4,4'-bis(4-aminophenoxy)biphenyl
   2,2-bis[4-(4-aminophenoxy)phenyl]propane
   1,4-bis(4-aminophenoxy)benzene
   1,3-bis(4-aminophenoxy)benzene
   bis[4-(4-aminophenoxy)phenyl]sulfone
   9,9-bis(4-aminophenyl)fluorene
   o-tolidine sulfone
   benzidine
   3,3'-dichlorobenzidine dihydrochloride
   benzidine dihydrochloride
   3,6-thioxanthenediamine-10,10-dioxide
   4,4'-diamino-2,2'-biphenyldisulfonic acid
   4,4'-azodianiline
   2,5-bis-(4-aminophenyl)-(1,3,4)oxadiazole
   3,3'-dimethylnaphthidine
   benzidine sulfate
   1,3-bis(3-aminophenoxy)benzene
   3,3'-dichlorobenzidine
   2,2',5,5'-tetrachlorobenzidine
   4,4'-diamino-1,1'-binaphthyl
   diamine bordeaux
   benzoflavin
   chrysaniline
   2,2'-thiobis(5-aminobenzenesulfonic acid)
   4,4'-methylene-bis(2-chloroaniline)
   tetrabromo methylenedianiline
   4,4'-diamino-3,3'-dinitrodiphenyl ether
   benzidine pyrophosphate
   3,6-diaminothioxanthene-10-dioxide, dihcl
   4,4"-diamino-p-terphenyl
   1,8-diamino-4,5-dihydroxyanthraquinone
   bis(p-aminophenoxy)dimethylsilane
   bis[4-(3-aminophenoxy)phenyl]sulfone
   4,4'-methylenedi-2,6-xylidine
   2-aminobenzaldehyde-ethylene-diimine
   3-methylbenzidine dihydrochloride
   3,3'-diethylbenzidine dihydrochloride
   3,6-diaminoacridine hydrochloride
   4,4'-diamino-5,5'-dimethyl-2,2'-biphenyl disulfonic acid disodium salt
   4,4'-methylenebis(3-chloro-2,6-diethylaniline)
   4,4'-methylene-bis-(2,6-diethylaniline)
   4,4'-methylenebis-(2,6-diisopropylaniline)
   toluylenediamine
   3,8-diamino-6-phenylphenanthridine
   thionin perchlorate
   dihydroethidium
   thionin
   4,4-diamino benzene sulfonyl anilide
   o-dianisidine hcl
   2,2'-dichloro-5,5'-dimethoxybenzidine
   3-methoxybenzidine
   2,2'-(hexamethylenedioxy)dianiline
   2,2'-(pentamethylenedioxy)dianiline
   2,2'-(ethylenedioxy)dianiline
   4-[4-(4-aminophenoxy)butoxy]aniline
   2,2'-diamino-4'-methoxy-4-methylbenzanilide
   5,5'-dimethyl-2,2'-dinitrobenzidine
   n,n'-bis(2-aminophenyl)-1,3-propanediamine
   3,4'-diaminochalcone
   2,3',4,5',6-pentaphenyl-3,4'-biphenyldiamine
   2-([1-(4-(1-[(2-aminophenyl)thio]-2-nitroethyl)phenyl)-2-nitroethyl]thio)anilin
   2-((2-[(2-aminophenyl)thio]ethyl)thio)aniline
   2-((4-[(2-aminophenyl)thio]but-2-enyl)thio)aniline
   4,4'-diamino-3,3'-dimethyldiphenyl methane
   2,2'-diamino-bibenzyl
   trimethylene bis(4-aminobenzoate)
   fluoresceinamine
   benzidines mixture
   3-nitro-4,4'-methylenedianiline
   4,4-diamino-2,2'-dichlorodiphenyl disulfide
   1,6-diaminopyrene
   1,8-diaminopyrene
   3,6-diaminocarbazole
   4,4'(5')-diamino-[2,4]-dibenzo-18-crown-6,dihydrochloride
   4,4'-diaminostilbene-2,2'-disulfonic acid, disodium salt
   (r)-(+)-2,2'-diamino-1,1'-binaphthyl
   proflavine hemisulfate dihydrate
   3,6-diaminoacridine hemisulfate hemihydrate
   dimidium bromide monohydrate
   o-tolidine dihydrochloride hydrate
   3,3',5,5'-tetramethylbenzidine dihydrochloride hydrate
   3,3'-diaminobenzidine tetrahydrochloride dihydrate
   3,6-[bis(4-amino-3-(sodiumsulphonato)phenlamino)]-2,5-dichloro 4-benzoquinone
   2,2'-dimethylbenzidine hydrochloride
   2,2'-(phenylmethylenebis)bis(4-methylaniline)
   3,4'-diaminobiphenyl
   2,7-diamino-9-fluorenone
   n,n'-bis(2-aminophenyl)oxamide
   2-[2-(2-aminophenyl)diaz-1-enyl]aniline
   3,5,3',5'-tetrabromo-biphenyl-4,4'-diamine
   n,n'-bis(4-aminophenyl)-1,3-bis(aminomethyl)benzene dihydrochloride
   4',4"(5")-diaminodibenzo-15-crown-5
   2,2'-bis(trifluoromethyl)benzidine
   bis(4-amino-2,3-dichlorophenyl)methane
   alpha,alpha'-bis(4-aminophenyl)-1,4-diisopropylbenzene
   2,2-bis(3-aminophenyl)hexafluoropropane
   3,10-diamino-6,13-dichlorobenzo[5,6][1,4]oxazino[2,3-b]phenoxazine-4,11-dis ulfo
   n1-(2-amino-4-methylphenyl)-2-aminobenzamide
   n1-(2-amino-4-chlorophenyl)-2-aminobenzamide
   2,2'-dichloro[1,1'-biphenyl]-4,4'-diamine
   4,4'(5')-diaminodibenzo-15-crown-5 dihydrochloride
   rcl s19,413-1
   bis-(4-amino-3-nitro-phenyl)-methanone
   bis-(3-amino-4-chloro-phenyl)-methanone
   bis-(3-amino-4-dimethylamino-phenyl)-methanone
   n,n'-bis-(4-amino-2-chloro-phenyl)-isophthalamide
   n,n'-bis-(4-amino-2-chloro-phenyl)-terephthalamide
   3,9-diamino-1,11-dimethyl-5,7-dihydro-dibenzo(a,c)cyclohepten-6-one
   2-aminobenzaldehyde n-[(z)-(2-aminophenyl)methylidene]hydrazone
   3,3'-bis(trifluoromethyl)benzidine
   dicarboxidine 2 hcl
   4,4'-(1,3-phenylenediisopropylidene)bisaniline
   1,4-phenylenebis[[4-(4-aminophenoxy)phenyl]methanone]
   2-((5-[(2-aminophenyl)thio]-3,4-dinitro-2-thienyl)thio)aniline
   n'1-(2-aminobenzoyl)-2-aminobenzene-1-carbohydrazide
   2-[4-(5-amino-1h-benzimidazol-2-yl)phenyl]-1h-benzimidazol-5-amine
   4-[4-(4-aminophenoxy)-2,3,5,6-tetrafluorophenoxy]aniline
   3,3'-dinitro-4,4'-diaminodiphenyl sulfone
   3,3',4,4'-tetraaminodiphenylsulfone
   4-[1-(4-aminophenyl)-1-methylethyl]aniline
   3,3-diamino diphenyl urea
   bis(4-aminophenyl)acetylene
   dibenzo(1,2)dithiine-3,8-diamine
   ethidium homodimer-2
   4.4'-bis-(2-aminobenzenesulfonyl)bis-phenolester
   neopentyl glycol bis(4-aminophenyl) ether
   2,2'-oxydianiline
   4,4'-diaminodiphenylamine-2,2-disulphonic acid
   4,4-diamino diphenyl urea
   3,3'-tolidine-5-sulfonic acid
   n1-(3-[(2-aminobenzoyl)amino]propyl)-2-aminobenzamide
   2-((6-[(2-aminophenyl)sulfanyl]-5-nitro-2-pyridyl)sulfanyl)aniline
   2-((6-amino-1,3-benzothiazol-2-yl)dithio)-1,3-benzothiazol-6-ylamine
   tetramethylbenzidine
   2-([6-[(2-aminophenyl)sulfanyl]-3,5-di(trifluoromethyl)-2-pyridyl]sulfanyl)anil
   3,6-diaminothioxanthene-1 0-dioxide dihydrochloride
   m-tolidine dihydrochloride hydrate
   2-amino-n-[2-amino-4-(trifluoromethyl)phenyl]-5-methylbenzamide
   2-([2-[(2-aminophenyl)thio]-6-nitro-4-(trifluoromethyl)phenyl]thio)aniline
   2-[(3-([(2-aminophenyl)thio]methyl)-2,4,6-trimethylbenzyl)thio]aniline
   3-[3-amino-5-(trifluoromethyl)benzyl]-5-(trifluoromethyl)aniline
   2-((5-[(2-aminophenyl)thio]-4-chloro-2-nitrophenyl)thio)aniline
   4-(1-(4-aminophenyl)-2-[4-(dimethylamino)phenyl]vinyl)aniline
   1,5-bis(4-aminophenoxy)pentane
   2,3'-dichlorobenzidine dihydrochloride
   3,3'-diamono-4,4'-dichlorodiphenyl sulfone
   3-(bis-(4-amino-phenyl)-methyl)-2,3-dihydro-isoindol-1-one
   4,4-diamino diphenyl-2-sulphonic acid
   4,4'-diamino-diphenylene-cycylohexane
   4,5'-diamino-(1,1')bianthracenyl-9,10,9',10'-tetraone
Alicyclic diamines
   4,4'-methylenebis(cyclohexylamine)
   4,4'-methylenebis(2-methylcyclohexylamine)
Aliphatic diamines
   1,8-diamino-p-menthane
   4,4'-methylenebis(cyclohexylamine)
   d-cystine
   l-cystine dimethyl ester dihydrochloride
   neamine
   bis(2-aminopropyl)amine
   (h-cys-beta-na)2 2 hcl
   l-cystine dibenzyl ester ditosylate
   1.4-diaminocyclohexane
   (h-cys-pna)2
   dl-2-aminopropionic anhydride
   l-cystine(di-b-naphthylamide)hydrochloride
   l-cystine-bis-p-nitroanilide dihydrobromide
   l-cystine diethyl ester dihydrochloride
   trans-1,4-cyclohexanediamine
   4,4'-methylenebis(2-methylcyclohexylamine)
   I-leucinethiol, oxidized dihydrochloride
   1,3-diaminoadamantane dihydrochloride
   I-leucinethiol disulfide 2 hcl
   I-cystine disodium salt, monohydrate
   I-homocystine methylester hydrochloride
   1,3-adamantanediamine
   tetracyclo[8.2.1.1(8,11).0(2,7)]tetradeca-2,4,6-triene-10,11-diamine
   tricyclo[3.3.1.0(3,7)]nonane-3,7-diamine

From the class of commercially available diamines preferred are the below listed ones:
Alicyclic diamines
4,4'-methylenebis(cyclohexylamine)
4,4'-methylenebis(2-methylcyclohexylamine)
Aliphatic diamines
4,4'-methylenebis(cyclohexylamine)
1.4-diaminocyclohexane
trans-1,4-cyclohexanediamine
4,4'-methylenebis(2-methylcyclohexylamine)
1,3-adamantanediamine
Aromatic diamines
2,7-diaminofluorene
2,6-diaminoanthraquinone
4,4'-diaminooctafluorobiphenyl
4,4'-diaminodiphenyl ether
4,4'-dithiodianiline
4,4'-diaminodiphenylmethane
4,4'-ethylenedianiline
3,3'-dimethoxybenzidine
o-tolidine
3,3'-diaminobenzophenone
3,3'-diaminodiphenylmethane
3,4'-diaminodiphenylmethane
2,2-bis[4-(4-aminophenoxy)phenyl]hexafluoropropane
4-[3-(4-aminophenoxy)propoxy]aniline
4,4'-diaminodiphenyl sulfide
4,4'-diaminobenzophenone
2,2-bis(4-aminophenyl)hexafluoropropane
4,4'-bis(4-aminophenoxy)biphenyl
2,2-bis[4-(4-aminophenoxy)phenyl]propane
1,4-bis(4-aminophenoxy)benzene
1,3-bis(4-aminophenoxy)benzene
bis[4-(4-aminophenoxy)phenyl]sulfone
9,9-bis(4-aminophenyl)fluorene
benzidine
4,4'-azodianiline
1,3-bis(3-aminophenoxy)benzene
4,4'-diamino-1,1'-binaphthyl
4,4"-diamino-p-terphenyl
bis(p-aminophenoxy)dimethylsilane
4-[4-(4-aminophenoxy)butoxy]aniline
3,4'-diaminochalcone
trimethylene bis(4-aminobenzoate)
3,4'-diaminobiphenyl
2,7-diamino-9-fluorenone
4',4"(5")-diaminodibenzo-15-crown-5
2,2'-bis(trifluoromethyl)benzidine
alpha,alpha'-bis(4-aminophenyl)-1,4-diisopropylbenzene
3,3'-bis(trifluoromethyl)benzidine
4,4'-(1,3-phenylenediisopropylidene)bisaniline
1,4-phenylenebis[[4-(4-aminophenoxy)phenyl]methanone]
4-[4-(4-aminophenoxy)-2,3,5,6-tetrafluorophenoxy]aniline
4-[1-(4-aminophenyl)-1-methylethyl]aniline
neopentyl glycol bis(4-aminophenyl) ether
4,4-diamino diphenyl or
1,5-bis(4-aminophenoxy)pentane

From the class of commercially available diamines (L) more preferred are the below listed ones:
Aromatic diamines
2,7-diaminofluorene
4,4'-diaminooctafluorobiphenyl
4,4'-diaminodiphenyl ether
4,4'-diaminodiphenylmethane
4,4'-ethylenedianiline
3,3'-diaminobenzophenone
4-[3-(4-aminophenoxy)propoxy]aniline
4,4'-diaminodiphenyl sulfide
4,4'-diaminobenzophenone
2,2-bis(4-aminophenyl)hexafluoropropane
4,4'-bis(4-aminophenoxy)biphenyl
2,2-bis[4-(4-aminophenoxy)phenyl]propane
1,4-bis(4-aminophenoxy)benzene
1,3-bis(4-aminophenoxy)benzene
9,9-bis(4-aminophenyl)fluorene
benzidine
bis(p-aminophenoxy)dimethylsilane
4-[4-(4-aminophenoxy)butoxy]aniline
3,4'-diaminochalcone
trimethylene bis(4-aminobenzoate)
3,4'-diaminobiphenyl
2,7-diamino-9-fluorenone
4',4"(5")-diaminodibenzo-15-crown-5
4-[4-(4-aminophenoxy)-2,3,5,6-tetrafluorophenoxy]aniline
4-[1-(4-aminophenyl)-1-methylethyl]aniline
1,5-bis(4-aminophenoxy)pentane
Aliphatic diamines
4,4'-methylenebis(cyclohexylamine)
1.4-diaminocyclohexane
Alicyclic diamines 4,4'-methylenebis(cyclohexylamine)

Preferably, the further polymer, homo- or copolymer or oligomer comprises at least a diamine as one of the basic building block, and a tetracarboxylic acid anhydride, preferably a tetracarboxylic acid anhydride of formula (II).

Preferably, the substituted or unsubstituted, preferably substituted within polar group or unsubstituted, tetracarboxylic acid anhydride is of formula (II) 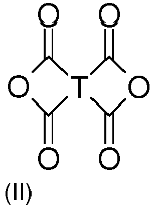 wherein:
- T: represents a tetravalent organic radical.

The tetravalent organic radical T is preferably derived from an aliphatic, alicyclic or aromatic tetracarboxylic acid dianhydride.

The tetravalent organic radical T is preferably derived from an aliphatic, alicyclic or aromatic tetracarboxylic acid dianhydride.

Preferred examples of aliphatic or alicyclic tetracarboxylic acid dianhydrides are:
1,1,4,4-butanetetracarboxylic acid dianhydride, ethylenemaleic acid dianhydride, 1,2,3,4-cyclobutanetetracarboxylic acid dianhydride, 1,2,3,4-cyclopentanetetracarboxyli c acid dianhydride; 2,3,5-tricarboxycyclopentylacetic acid dianhydride (with the term "2,3,5-tricarboxycyclopentylacetic acid dianhydride" all isomers of this compound are incorporated especially the exo and/or endo body), 2,3,5-tricarboxycyclopentylacetic-1,2:3,4-dianhydride is accessible for example by processes as described in JP59-190945, JP60-13740 and JP58-109479, respectively DE 1078120 and JP58-109479, or GB 872,355, and JP04458299;
tetrahydro-4,8-methanofuro[3,4-d]oxepine-1,3,5,7-tetrone, 3-(carboxymethyl)-1,2,4-cyclopentanetricarboxylic acid 1,4:2,3-dianhydride, hexahydrofuro[3',4':4,5]cyclopenta[1,2-c]pyran-1,3,4,6-tetrone, 3,5,6-tricarboxy-norbornylacetic acid dianhydride, 2,3,4,5-tetrahydrofurantetracarboxylic acid dianhydride,rel-[1S,5R,6R]-3-oxabicyclo[3.2 .1]octane-2,4-dione-6-spiro-3'-(tetrahydrofuran2',5'-dione), 4-(2,5-dioxotetrahydrofuran-3-yl)tetrahydronaphthalene-1,2-dicarboxylicacid dianhydride, 5-(2,5-dioxotetrahydro-furan-3-yl)-3-methyl-3-cyclohexene--1,2-dicarboxylic-acid dianhydride, bicyclo[2.2.2]oct-7-ene-2,3,5,6-tetracarboxylic acid dianhydride, bicyclo[2.2.2]octane-2,3,5,6-tetracarboxylic acid dianhydride, 1,8-dimethylbicyclo[2.2.2]oct-7-ene-2,3,5,6-tetracarboxylic acid dianhydride, pyromellitic acid dianhydride,3,3',4,4'-benzophenonetetracarboxylic acid dianhydride, 4,4'-oxydiphthalic acid dianhydride, 3,3',4,4'-diphenylsulfonetetracarboxylic acid dianhydride, 1,3-dimethyl-1,2,3,4-cyclobutanetetracarboxylicacid dianhydride, 1,3-difluoro-1,2,3,4-cyclobutanetetracarboxylicacid dianhydride, 1,3-dichloro-1,2,3,4-cyclobutanetetracarboxylicacid dianhydride, 1,2,3-trimethyl-1,2,3,4-cyclobutanetetracarboxylicacid dianhydride, 1,2,3,4-tetramethyl-1,2,3,4-cyclobutanetetracarboxylicacid dianhydride, 1-methyl-1,2,3,4-cyclobutanetetracarboxylicacid dianhydride, 1,4,5,8-naphthalenetetracarboxylic acid dianhydride,2,3,6,7-naphthalenetetracarboxylic acid dianhydride, 3,3',4,4'-dimethyldiphenylsilanetetracarboxylic acid dianhydride, 3,3',4,4'-tetraphenylsilanetetracarboxylic acid dianhydride,1,2,3,4-furantetracarboxylic acid di-anhydride, 4,4'-bis(3,4-dicarboxyphenoxy)diphenyl sulfide dianhydride, 4,4'-bis(3,4-dicarboxyphenoxy)-diphenyl sulfone dianhydride, 4,4'-bis(3,4-dicarboxyphenoxy)diphenylpropane dianhydride, 3,3',4,4'-biphenyltetracarboxylic acid dianhydride, ethylene glycol bis(trimellitic acid) dianhydride,4,4'-(1,4-phenylene)bis(phthalic acid) dianhydride, 4,4'-(1,3-phenylene)bis(phthalic acid) dianhydride, 4,4'-(hexafluoroisopropylidene)diphthalic acid dianhydride, 4-*tert*-butyl-6-(2,5-dioxotetrahydro-3-furanyl)-2-benzofuran-1,3-dione, 5-(2,5-dioxotetrahydro-3-furanyl)-3a,4,5,9b-tetrahydronaphtho[1,2-*c*]furan-1,3-dione, 5-(2,5-dioxotetrahydro-3-furanyl)-5-methyl-3a,4,5,9b-tetrahydronaphtho[1,2-*c*]furan-1,3-dione, 5-(2,5-dioxotetrahydro-3-furanyl)-6-methylhexahydro-2-benzofuran-1,3-dione, 5-(2,5-dioxotetrahydro-3-furanyl)-7-methyl-3a,4,5,7a-tetrahydro-2-benzofuran-1,3-dione, 6-(2,5-dioxotetrahydro-3-furanyl)-4-methylhexahydro-2-benzofuran-1,3-dione, 9-isopropyloctahydro-4,8-ethenofuro[3',4':3,4]cyclobuta[1,2-*f*][2]benzofuran-1,3,5,7-tetrone, 1,2,5,6-cyclooctanetetracarboxylic acid dianhydride, octahydro-4,8-ethenofuro[3',4':3,4]cyclobuta[1,2-f][2]benzofuran-1,3,5,7-tetrone, octahydrofuro[3',4':3,4]cyclobuta[1,2-*f*][2]benzofuran-1,3,5,7-tetrone, tetrahydro-3,3'-bifuran-2,2',5,5'-tetrone, 4,4'-oxydi(1,4-phenylene)bis(phthalic acid) dianhydride, and 4,4'-methylenedi(1,4-phenylene)bis(phthalic acid) dianhydride.

Preferred examples of aromatic tetracarboxylic acid dianhydrides are:
pyromellitic acid dianhydride,
3,3',4,4'-benzophenonetetracarboxylic acid dianhydride,
4,4'-oxydiphthalic acid dianhydride,
3,3',4,4'-diphenylsulfonetetracarboxylic acid dianhydride,
1,4,5,8-naphthalenetetracarboxylic acid dianhydride,
2,3,6,7-naphthalenetetracarboxylic acid dianhydride,
3,3',4,4'-dimethyldiphenylsilanetetracarboxylic acid dianhydride,
3,3',4,4'-tetraphenylsilanetetracarboxylic acid dianhydride,
1,2,3,4-furantetracarboxylic acid dianhydride,
4,4'-bis(3,4-dicarboxyphenoxy)diphenyl sulfide dianhydride,
4,4'-bis(3,4-dicarboxyphenoxy)diphenyl sulfone dianhydride,
4,4'-bis(3,4-dicarboxyphenoxy)diphenylpropane dianhydride,
3,3',4,4'-biphenyltetracarboxylic acid dianhydride,
ethylene glycol bis(trimellitic acid) dianhydride,
4,4'-(1,4-phenylene)bis(phthalic acid) dianhydride,
4,4'-(1,3-phenylene)bis(phthalic acid) dianhydride,
4,4'-(hexafluoroisopropylidene)diphthalic acid dianhydride,
4,4'-oxydi(1,4-phenylene)bis(phthalic acid) dianhydride,
4,4'-methylenedi(1,4-phenylene)bis(phthalic acid) dianhydride,
4-tert-butyl-6-(2,5-dioxotetrahydro-3-furanyl)-2-benzofuran-1,3-dione,
and the like.

More preferably the tetracarboxylic acid dianhydrides used to form the tetravalent organic radical T are selected from:
1,2,3,4-cyclobutanetetracarboxylic acid dianhydride,
1,2,3,4-cyclopentanetetracarboxylic acid dianhydride,
2,3,5-tricarboxycyclopentylacetic acid dianhydride,
tetrahydro-4,8-methanofuro[3,4-d]oxepine-1,3,5,7-tetrone,
3-(carboxymethyl)-1,2,4-cyclopentanetricarboxylic acid 1,4:2,3-dianhydride, hexahydrofuro[3',4':4,5]cyclopenta[1,2-c]pyran-1,3,4,6-tetrone,
5-(2,5-dioxotetrahydrofuran-3-yl)-3-methyl-3-cyclohexene-1,2-dicarboxylic acid dianhydride,
pyromellitic acid dianhydride,
4-(2,5-dioxotetrahydrofuran-3-yl)tetrahydronaphthalene-1,2-dicarboxylic acid dianhydride,
5-(2,5-dioxotetrahydro-3-furanyl)-5-methyl-3a,4,5,9b-tetrahydronaphtho[1,2-c]furan-1,3-dione,
5-(2,5-dioxotetrahydro-3-furanyl)-3a,4,5,9b-tetrahydronaphtho[1,2-c]furan-1,3-dione,
5-(2,5-dioxotetrahydro-3-furanyl)-7-methyl-3a,4,5,7a-tetrahydro-2-benzofuran-1,3-dione,
4-tert-butyl-6-(2,5-dioxotetrahydro-3-furanyl)-2-benzofuran-1,3-dione,
4,4'-(hexafluorneoisopropylidene)diphthalic acid dianhydride and
bicyclo[2.2.2]oct-7-ene-2,3,5,6-tetracarboxylic acid dianhydride.

In the context of the present invention the term "polyimide" has the meaning of partially or complete imidisated polyamic acid or polyamic ester. In analogy, the term "imidisation" has in the context of the present invention the meaning of partially or complete imidisation.

The second embodiment of the present invention relates more particularly to a composition wherein the second polymer is 100% imidised, or has an imidisation degree in the range of 1 to 99%, preferably 5 to 50%, more preferably 10 to 40% by weight.

In the context of the second embodiment of the present invention, the composition may comprise a siloxane oligomer, polymer or copolymer as described above, a second polymer which is different from the first one and at least one additional polymer which is different from the first and from the second polymer of the composition.

The third object of the present invention is to provide an orientation layer comprising said composition. More preferably the orientation layer further comprises a polymerisable liquid crystal.

It is understood that the orientation layers of the present invention (in form of a polymer gel, a polymer network, a polymer film, etc.) can be used as orientation layers for liquid crystals. A further preferred embodiment of the invention relates to an orientation layer comprising the composition according to the invention, wherein the polymers comprising the monomer of formula (I) or (IV) are preferably in a cross-linked form. Such orientation layers can be used in the manufacture of unstructured or structured optical-or electro-optical elements, preferably in the production of hybrid layer elements.

In the context of the present invention the wording "polymer or oligomer layer" has the meaning of "polymer layer, copolymer layer, homopolymer layer or oligomer layer".

In the context of the present invention the wording "orientation layer" has the same meaning as "orientation film".

In the context of the present invention polymer or oligomer layers are preferably orientation layers.

The polymers, homo-or copolymers or oligomers according to the invention may be used in form of polymer layers or oligomer layers alone or in combination with other polymers, oligomers, monomers, photo-active polymers, photo-active oligomers and/or photo-active monomers, depending upon the application to which the polymer or oligomer layer is to be added. Therefore it is understood that by varying the composition of the polymer or oligomer layer it is possible to control specific and desired properties, such as an induced pre-tilt angle, or surpressing of tilt, good alignment quality, contrast ratio, good surface wetting, a high voltage holding ratio, a specific anchoring energy, image sticking etc.

The orientation layers are suitably prepared from a composition according to the present invention. The polymer or oligomer solution is applied to a support optionally coated with an electrode [for example a glass plate coated with indium-tin oxide (ITO)] so that homogeneous layers of 0.05 to 50 µm thickness are produced. In this process different coating techniques like spin-coating, meniscus-coating, wire-coating, slot-coating, offset-printing, flexo-printing, gravur-printing may be used. Then, or optionally after a prior imidisation step, the regions to be oriented are irradiated, for example, with a high-pressure mercury vapour lamp, a xenon lamp or a pulsed UV laser, using a polarizer and optionally a mask for creating images of structures.

The irradiation time is dependent upon the output of the individual lamps and can vary from a few seconds to several hours. The photo-reaction (dimerisation, polymerisation, cross-linking) can also be carried out, however, by irradiation of the homogeneous layer using filters that, for example, allow only the radiation suitable for the crosslinking reaction to pass through.

It is understood that the orientation layers of the invention may be used in the production of optical or electro-optical devices having at least one orientation layer as well as unstructured and structured optical elements and multi-layer systems.

The fourth object of the present invention is to provide a method for the preparation of the orientation layer by exposure composition with aligning light.

The polymer comprising a monomer of formula (I) or (IV) as described above, has at least a photo-reactive group in a side chain. Preferably, the photo-reactive group of the side chains reacts by exposure to aligning light.

In the context of the present invention the term photo-reactive groups have the meaning of groups, which are able to react by interaction with light, preferably aligning light.

The treatment with aligning light may be conducted in a single step or in several separate steps. In a preferred embodiment of the invention the treatment with aligning light is conducted in a single step.

In the context of the present invention photo-reactive group has preferably the meaning of a dimerizable, isomerizable, polymerizable and/or cross-linkable group.

In the context of the present invention, aligning light, preferably polarized light is light of wavelengths, which can initiate photoalignment. Preferably, the wavelengths are in the UV-A, UVB and/or UV/C-range, or in the visible range. It depends on the photoalignment compound, which wavelengths are appropriate. Preferably, the photo-reactive groups are sensitive to visible and/or UV light. A further embodiment of the invention concerns the generating of aligning light by laser light.

The instant direction of the aligning light may be normal to the substrate or at any oblique angle.

More preferably, aligning light is at least partially linearly polarized, elliptically polarized, such as for example circulary polarized, or non-polarized; most preferably at least circulary or partially linearly polarized light, or non-polarized light exposed obliquely. Especially, most preferred aligning light denotes substantially polarised light, especially linearly polarised light; or aligning light denotes non-polarised light, which is applied by an oblique irradiation.

A more preferred embodiment of the invention relates to a method for the preparation of the orientation layer by exposuring the composition comprising a polymer comprising a monomer of fomula (I) or (IV) and an additive selected from the group consisting of acid generators, base generators, acids and bases with polarised light, especially linearly polarised light, or by oblique radiation with non-polarised light.

Further preferred polymers comprising a monomer of formula (I) or (IV),
- wherein at least 1%, preferably at least 5%, more preferably at least 8%, most preferably at least 10%, especially most preferred at least 15 %, more especially preferred at least, 30%, even more preferred at least 50%, 60% or 75% of the monomers include a side chain with a photo-reactive group; and/or
- wherein, the photo-reactive groups are able to dimerize, isomerize, polymerize; crosslink and/or
- wherein the polymer, homo- or copolymer or oligomer is a polymer gel or a polymer network, or an oligomer gel or an oligomer network, respectively; and/or
- wherein the polymer, homo- or copolymer or oligomer has an intrinsic viscosity in the range of 0.01 to 10 dL/g, preferably in the range of 0.01 to 5 dL/g; and/or
- wherein the polymer, homo- or copolymer or oligomer has a molecular weight of 1 to 6'000'000, 1'000 to 6'000'000 2'000 to 1'000'000, 2'000 to 500'000, more preferably 5'000 to 200'000.
- wherein the polymer, homo- or copolymer or oligomer contains from 2 to 15000 repeating units, especially from 4 to 1000 repeating units, more especially 6 to 500 repeating units; and/or
- wherein the polymer, homo- or copolymer or oligomer is in the form of a homopolymer or of a copolymer, preferably of a statistical copolymer.

Polymer or oligomer layers may readily be prepared from composition of the present invention and a further embodiment of the invention relates to an orientation layer comprising said composition and which is preferably prepared by treatment with aligning light.

The polymer or oligomer layer is preferably prepared by applying one or more compositions according to the invention to a support and subsequent evaporation of the solvent and/or of the additives, and, after imidisation or without imidisation, irradiating the polymer or oligomer or polymer mixture or oligomer mixture with aligning light. Aligning light has the above given meaning and preferences.

The term "support" as used in the context of the present invention is preferably transparent or not-transparent, preferably glass or plastic substrates, polymer films, such as polyethyleneterephthalat (PET), tri-acetyl cellulose (TAC), polypropylen, optionally coated with indium tin oxide (ITO), however not limited to them.

In general a composition comprising the siloxane polymers, copolymers or oligomers of the invention is applied by general coating and printing methods known in the art, such as spin-coating, meniscus-coating, wire-coating, slot-coating, offset-printing, flexo-printing, gravure-printing, ink jet printing may be used. Coating methods are for example spin coating, air doctor coating, blade coating, knife coating, reverse-roll coating, transfer roll coating, gravure roll coating, kiss roll coating, cast coating, spray coating, slot-orifice coating, calendar coating, electrodepositing coating, dip coating or die coating.

Printing methods are for example relief printing such as flexographic printing, ink jet printing, intaglio printing such as direct gravure printing or offset gravure printing, lithographic printing such as offset printing, or stencil printing such as screen printing.

A further preferred embodiment of the present invention relates to orientation layers which are unstructured or structured.

In addition the present invention relates to a process for the preparation of structured polymer layers, copolymer layers or oligomer layers comprising varying the direction of orientation and/or the tilt angle within the polymer or oligomer layer. This varying of the direction of orientation and/or the tilt angle can for example be conducted by controlling the direction of the irradiation of the aligning light. It is understood that by selectively irradiating specific regions of the polymer or oligomer layer very specific regions of the layer can be aligned. In this way, layers with a defined tilt angle can be provided.

The irradiation time is dependent upon the output of the individual lamps and can vary from a few seconds to several hours. The photo-reaction can also be carried out, however, by irradiation of the homogeneous layer using filters that, for example, allow only the radiation suitable for the reaction to pass through.

Further preferred is a process for the preparation of a polymer layer, copolymer layer or oligomer layer; for the preparation of planar multi-domain planar alignment of a polymer layer or oligomer layer; and/or for the preparation of a polymer layer, copolymer or oligomer layer having a tilt angle within the given meaning and preferences of the invention.

A further preferred embodiment of the invention relates to an orientation layer comprising one or more compositions according to the invention.

In the context of the present invention orientation layer has the same meaning and preferences as alignment layer, polymer, homo- or copolymer or oligomer layer and is preferably a photo alignment layer.

In the context of the invention relates to an orientation layer according to the invention for the planar alignment of liquid crystals or for the vertical alignment of liquid crystals. In a preferred embodiment of the present invention, the orientation layer is used for the planar alignment of liquid crystals. In an even more preferred embodiment according to the invention, the orientation layer comprising the compound of formula (IV) is used for the planar alignemtn of liquid crystals.

In the context of the present invention the wording "planar alignment of liquid crystals" means that the liquid crystals have tilt angle.

The term tilt angle as used in the context of the present invention is the angle between the liquid crystal director and the surface of the alignment layer. The liquid crystal director shall mean the average direction of the long axes of the liquid crystal molecules. In the context of the present invention, planar alignment shall mean that the tilt angle is less than 30°, preferably 0 to 30°, vertical alignment shall mean that the tilt angle is around 90°, preferably between 85° to 90°.

In preferred embodiments the tilt angle of the liquid crystals, induced by the photoalignment layer is less than 10°, preferably 0 to 10°. In more preferred embodiments the tilt angle is less than 5°, preferably 0 to 5°, and in most preferred embodiments the tilt angle is less than 1 °, preferably 0 to 1 °, even more preferably from 0° to 0.5°. Preferred are tilt angles of less than 0.2° or 0.1 °.

A preferred method of the present invention concerns a method, wherein the direction of orientation and the tilt angle within the polymer layer or oligomer layer is varied by controlling the direction of the irradiation with aligning light, and/or wherein by selectively irradiating specific regions of the polymer layer or oligomer layer specific regions of the layer are aligned.

The fifth embodiment of the present invention relates to the use of said orientation layer, for the alignment, especially the planar alignment, of
- a) liquid crystal composition comprising one or more polymerizable liquid crystal monomers, or comprising one or more liquid crystal polymers or oligomers, which are the polymerized form of said polymerizable liquid crystal monomers, and/or
- b) liquid crystal compositions comprising one or more polymerizable liquid crystal monomers, or comprising one or more liquid crystal polymers or oligomers, which are the polymerized form of said polymerizable liquid crystal monomers, said liquid crystal compositions being sandwiched between a pair of said orientation layers.

Example of LCsP are described in US2012/114907 A1.

Further, the present invention relates preferably to the use of an orientation layer according to the invention for the induction of planar alignment of adjacent liquid crystalline layers, in particular for operating a cell wherein planar orientation is provided, such in IPS, such as IPS modes like S-IPS (Super IPS), AS-IPS (Advanced super IPS), E-IPS (Enhanced IPS), H-IPS (Horizontal IPS), UH-IPS, S-IPS II, e-IPS, p-IPS (performance IPS), PLS technology (plane to line switching), PS-IPS (polymer stabilized IPS), Field induced photoreactive alignment IPS FFS (fringe field switching), TN (twisted nematic), STN (supertwisted nematic).

Liquid crystal compositions of the present invention comprise a polymerizable monomer, or a polymer or oligomer, which is the polymerized form of said poylmerizable monomer. The polymerizable monomer or the polymer or oligomer, is bifunctional and/or has a rigid core (e.g. benzene). Further preferred is a polymerizable monomer, or a polymer or oligomer, which have one or more ring or condensed ring structures and functional groups bonded directly to the ring or condensed ring structure.

More preferred liquid crystals have a monomer of formula (V)

P₁-S₁-A₁-(Z₁-A₂)n-S₂-P₂ (V)

wherein
P₁ and P₂ are functional groups and are independently selected from acrylate, methacrylate, halogenacrylate, such as fluoroacrylate, chloroacrylate; oxetanyl, maleinimidyl, allyl, allyloxy, vinyl, vinyloxy and epoxy groups.

S₁ and S₂ of formula (V) are independently from each other a single bond or a spacer unit, which is preferably a straight-chain or branched, substituted or unsubstituted C₁-C₂₄alkylen, in which one or more, preferably non-adjacent, C-atom, CH- or CH₂-, group may be replaced by a linking group within the above given meaning and preferences, and, preferably replaced by is a single bond, -O-, -O(CO), -S-, -(CO)O- or 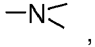 NR²-, and wherein the substituent is preferably at least one C₁-C₆alkyl, preferably methyl.

A₁ and A₂ of formula (V) are ring structures and independently selected from unsubstituted or substituted carbocyclic or heterocyclic aromatic or alicyclic group with the meaning and preferences given in the present invention, especially preferred are 1,4-phenylene naphthalene- 2,6-diyl, terphenyl, quarterphenyl, phenanthrene groups,
Z₁ of formula (V) is selected from -O-, -CO-, -CH(OH)-, -CH₂(CO)-, -OCH₂-, -CH₂O-,-O-CH₂-O-, -COO-, -OCO-, -(CO)-(CO)-, -OCF₂-, -CF₂O-, -CF₂-, -CON(C₁-C₁₆alkyl)-,-(C₁-C₁₆alkyl)NCO-, -CONH-, -NHCO-, -HNOCO-, -OCONH-, -NHCONH-, -OCOO- , -CO-S-, -S-CO- , -CSS, -SOO-, -OSO-,-SOS-, -SO-, -CH₂(SO)-, -SO₂-, -CH=CH-, -C≡C-, -CH=CH-COO-, -OCO-CH=CH-, -CH=N-, -C(CH₃)=N-, -N=N-, or a single bond; or a cyclic, straight-chain or branched, substituted or unsubstituted C₁-C₂₄alkylen, wherein one or more C-atom, CH- or CH₂-group may independently from each other be replaced by a linking group;
preferably, Z₁ of formula (V) is -O-, -CO-, -COO-, -OCO-, -OCOO-, -OCF₂-, -CF₂O-,-CON(CH₃)-, -(CH₃)NCO-, -CONH-, -NHCO-, -CO-S-, -S-CO-, - CSS, -SOO-, -OSO-,-CSS-, -SOO-, -OSO-, -CH₂(SO₂)-, -CH₂-CH₂-, -OCH₂-, -CH₂O-, -CH=CH-, -C≡C-, -CH=CH-COO-, -OCO-CH=CH-, or a single bond;
more preferably Z₁ of formula (V) is -COO-, -OCO-, -OCOO-, -OCF₂-, -CF₂O-,-CON(CH₃)-, -(CH₃)NCO-, -CONH-, -NHCO-, -CO-S-, -S-CO-, -CS-S-, -SOO-, -OSO,
especially -COO-, -OCO-, -OCF₂-, -CF₂O-, -CON(CH₃)-, -(CH₃)NCO-, -CONH-, -NHCO- or a single bond, most preferred Z₁ is a single bond, -COO- or -OCO-; and
n of formula (V) is an integer of 1, 2, or 3.

In formula (II), P₁ and P₂ are preferably acrylate or methacrylate groups, S₁ and S₂ are a single bond Z₁ is preferably a single bond, and n is preferably 0 or 1.

Most preferred is a compound represented by any one of the formulae (VI), (VII) or (VIII) 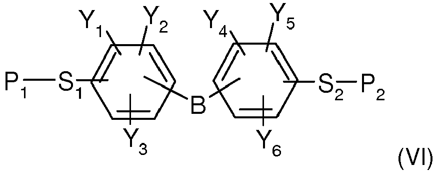 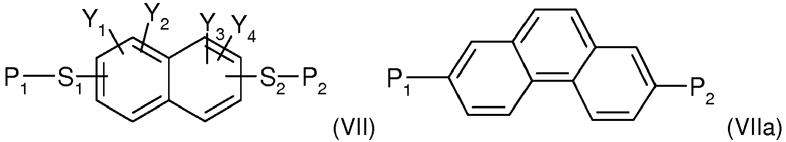 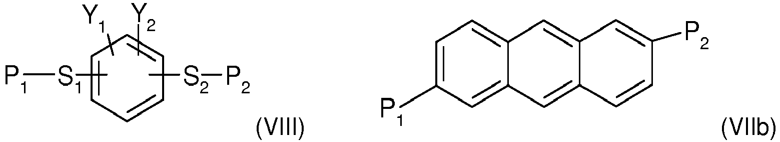
wherein P₁ and P₂ are independently from each other an acrylate, methacrylate, oxetane, maleinimide, allyl, allyloxy, vinyl, vinylamide, vinyloxy and epoxy group, epoxy derivatives, butoxy and butoxy derivatives,
B is a single bond, -CO-C(C₁-C₆alkoxy)₂-, -COO-, -OCO-,
Y₁, Y₂, Y₃, Y₄, Y₅, Y₆ are independently from each other hydrogen, a straight-chain or branched C₁-C₁₆alkyl group, which is unsubstituted or substituted by fluorine, di-(C₁-C₁₆alkyl)amino, C₁-C₁₅alkyloxy, nitro, nitrile and/or chlorine; and wherein one or more C-atom, CH- or CH₂- group may independently from each other be replaced by a linking group; halogen or nitrile; preferred substituents are C₁-C₆alkyl group, especially methyl or ethyl, C₁-C₆alkoxy group, especially methoxy or ethoxy, chlorine, fluorine, or nitrile, more preferably methoxy, chlorine, fluorine, or CN and most preferably methoxy, chlorine or fluorine; further, if the aromatic group is substituted, then it is preferably substituted once or twice;
S₁, S₂, are independently from each other a single bond or a spacer unit, as described above.

In formula (V), P₁ and P₂ are preferably acrylate or methacrylate groups, S₁ and S₂ are a single bond Z₁ is preferably a single bond, and n is preferably 0 or 1.

In formulae (V) and (VII) a substituent group for the benzene ring is present at the o-position, m-position, or p-position. In formula (VI), a substituent group for the naphthalene ring is present at the o-position, m-position, p-position, ana-position, E (epi)-position, kata-position, pen-position, pros-position, amphi-position, or 2,7-position. The substituent group for the benzene ring is preferablypresent at the p-position among the above positions. The substituent group for the naphthalene ring is preferably present at the amphi-position among the above positions.

Preferred are:

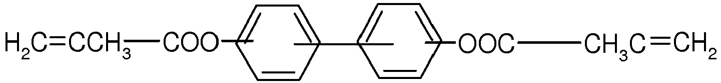

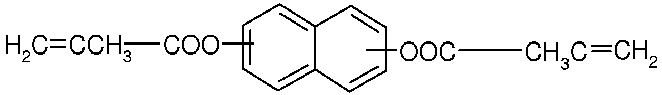

In general the liquid crystals compositions or liquid crystal layers are not particularly limited, provided that they contain the mono- or/and multi-polymerizable monomer described above. The liquid crystals compositions or liquid crystal layers can thus be made of any of various liquid crystal materials that have been known publicly. The liquid crystals compositions or liquid crystal layers may be made of a liquid crystal material identical to or different from that for display use.

The oligomer, which is the polymerized form of the polymerizable monomer, is in general not limited to any molecular weight. Preferably the molecular weight is in the range of 200 to 5000 Dalton, more preferably in the range of 500 to 2000 Dalton and most preferred in the range of 500 to 1000 Dalton.

In the sixth embodiment the present invention relates to a method for manufacturing a liquid crystal display.

In the context of the present invention the term "display" has the same meaning as the term "panel".

The method for producing the liquid crystal display panel may involve using a polymerization initiator, such as methyl ethyl ketone peroxide and a benzoyl ether-based compound.

Preferably, the present invention relates to a method for manufacturing a liquid crystal display comprising applying at least a single LCP onto a siloxane polymer, copolymer or oligomer layer according to the first or second embodiment, or preferably on the orientation layer according to the third or fourth embodiment of the present invention, and polymerizing said LCP.

In general the polymerization of the LCP is conducted by irraditation or at elevated temperature.

The LCP may be applied onto the orientation layer in any amount, so the amount is not particularly limited. The amount may be set as appropriate in accordance with, for example, respective thicknesses of the LCP polymer films formed by polymerization of the monomeric LCP.

Further the present invention relates to a method for manufacturing a liquid crystal display comprising bringing into contact a liquid crystal composition comprising a polymerizable liquid crystal monomer according to the present invention, or a polymer or oligomer, which is the polymerized form of said poylmerizable liquid crystal monomer; with at least a single orientation layer according to the present invention, preferably two orientation layers facing each other; and polymerising said polymerizable liquid crystal monomer.

Generally the polymerization methods are not limited so far as they have no adverse effects on the manufactured device. Preferably the polymerization is conducted by irradiation, especially UV radiation, or by heat.

More specifically the process for the preparation of liquid crystal displays, preferably LCDs comprising planar alignment of liquid crystals, more especially LCDs comprising the IPS mode, comprising an orientation layer according to the present invention and electrodes, comprises performing an exposure, preferably a first exposure, of the material with the polarised light, wherein the exposure induces an orientation direction of the liquid crystals perpendicular to polarised light, or/and wherein an exposure, preferably a first exposure, induces an orientation direction of the liquid crystals and polarised light direction make an angle higher than 70°, or/andwherein an exposure, preferably a first exposure, with polarized light is conducted with an angle >70° between the electrode and the polarized light direction.

The seventh object of the present invention relates to optical or electro-optical unstructured of structured elements comprising the composition according to the present invention or the orientation layer of the third embodiment.

In the optical or electro-optical device according to the present invention the compound comprising the monomer of formula (I) or (IV) may be in cross-linked form. The electro-optical devices may comprise more than one orientation layer. The layer or each of the layers may contain one or more regions of different spatial orientation.

In a preferred embodiment the element is a liquid crystal display cell.

In the context of the present invention elements, device, cell, structure all refer to objects comprising polymerized or polymerizable liquid crystal to be oriented with the linear, branched or crosslinked siloxane polymer, copolymer or oligomer according to the present invention.

Preferably, the present invention further relates to unstructured or structured elements optical or electrooptical devices, especially a LCD, comprising a pair of substrates facing each other; wherein the substrates is provided with a pair of orientation layers according to the present invention and
- a) optionally, a LCP polymer film, wherein said polymer film is formed on that orientation layer, or
- b) a liquid crystal composition, preferably comprising a polymer made from at least a polymerizable liquid crystal monomer, wherein said liquid crystal composition is sandwiched between the pair of orientation layers.

The present invention also relates to the use of such orientation layers for the alignment, preferably planar alignment, of liquid crystals, preferably in the manufacture of unstructured or structured optical-or electro-optical elements, preferably in the production of hybrid layer elements. Preferably, these optical or electro-optical devices have at least one orientation layer as well as unstructured and structured optical elements and multi-layer systems. The layer or each of the layers may contain one or more regions of different spatial orientation.

Polarised light direction shall mean the intersection line of the alignment layer surface and the plane of polarization of the polarised light during the exposure. If the polarised light is elliptically polarized, the plane of polarization shall mean the plane defined by the incident direction of the light and by the major axis of the polarization ellipse.

The term polarised light direction is used in the context of the present invention not only to describe a direction for the duration of the exposure process, but also after exposure to refer to the direction of the polarised light on the alignment layer as it was applied during exposure.

The electrodes are preferably in the form of parallel stripes, zig-zag or comb-like electrodes.

Preferably, the present invention concerns an optical and electro-optical unstructured or structured constructional elements, preferably liquid crystal display cells, multi-layer and hybrid layer elements, comprising at least one polymer layer, copolymer or oligomer layer according to the present invention.

The present invention the wording optical or electro-optical elements has preferably the meaning of multilayer systems, or devices for the preparation of a display waveguide, a security or brand protection element, a bar code, an optical grating, a filter, a retarder, a compensation film, a reflectively polarizing film, an absorptive polarizing film, an anisotropically scattering film compensator and retardation film, a twisted retarder film, a cholesteric liquid crystal film, a guest-host liquid crystal film, a monomer corrugated film, a smectic liquid crystal film, a polarizer, a piezoelectric cell, a thin film exhibiting non linear optical properties, a decorative optical element, a brightness enhancement film, a component for wavelength-band-selective compensation, a component for multi-domain compensation, a component of multiview liquid crystal displays, an achromatic retarder, a polarization state correction / adjustment film, a component of optical or electro-optical sensors, a component of brightness enhancement film, a component for light-based telecommunication devices, a G/H-polarizer with an anisotropic absorber, a reflective circular polarizer, a reflective linear polarizer, a MC (monomer corrugated film), twisted nematic (TN) liquid crystal displays, hybrid aligned nematic (HAN) liquid crystal displays, electrically controlled birefringence (ECB) liquid crystal displays, supertwisted nematic (STN) liquid crystal displays, optically compensated birefringence (OCB) liquid crystal displays, pi-cell liquid crystal displays, PLS technology (plane to line switching), PS-IPS (polymer stabilized IPS), in-plane switching (IPS) liquid crystal displays, such as IPS modes like S-IPS (Super IPS), AS-IPS (Advanced super IPS), E-IPS (Enhanced IPS), H-IPS (Horizontal IPS), UH-IPS, S-IPS II, e-IPS, p-IPS (performance IPS); Field induced photoreactive alignment IPS, fringe field switching (FFS) liquid crystal displays; (FPA) field-induced photo-reactive alignment; hybrid FPA; VA-IPS mode liquid crystal displays, or displays using blue phase liquid crystals; all above display types are applied in either transmissive or reflective or transflective mode.

More preferred optical or electro-optical elements are PLS technology (plane to line switching), PS-IPS (polymer stabilized IPS), in-plane switching (IPS) liquid crystal displays, such as IPS modes like S-IPS (Super IPS), AS-IPS (Advanced super IPS), E-IPS (Enhanced IPS), H-IPS (Horizontal IPS), UH-IPS, S-IPS II, e-IPS, p-IPS (performance IPS); Field induced photoreactive alignment IPS, fringe field switching (FFS) liquid crystal displays; (FPA) field-induced photo-reactive alignment; hybrid FPA; VA-IPS mode liquid crystal displays, or displays using blue phase liquid crystals; all above display types are applied in either transmissive or reflective or transflective mode.

The advantages of the present invention could not be foreseen by a skilled person.

It has surprisingly been found, that the compositions of the present invention, upon irradiation with polarized light, orient polymerized or polymerizable liquid crystals and are stable at high annealing temperatures. Further, said compositions show good and homogenous planar orientation quality. The further examples will demonstrate that the compositions of the present invention have good or very good image sticking properties, contrast ratios, and voltage holding ratios.

The further examples are a non-limiting selection of examples which will further explain the invention.

### Examples

### Definitions used in the examples:

NMP: N-methyl-2-pyrrolidone
BC: Butyl cellusolve
THF: tetrahydrofuran
RT: room temperature, usually in the range of 18 °C to 28 °C
wt % : weight percent
MLC7067: is a mixture of liquid crystal available from Merck KGA with a Dielectric anisotropy of 10.3, an optical anisotropy of 0.1025 and a rotational viscosity of 81 m.Pa.s.

The polymers used in the examples are

| Polymer | Structure |
|---|---|
| **P1** | 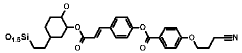 |
| **P2** | 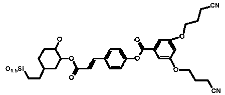 |
| **P3** | 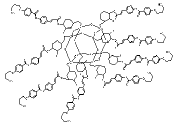 |
| **P4** | 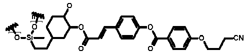 |
| **P5** | 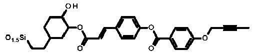 |
| **P6** | 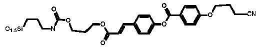 |
| **PAA1** | 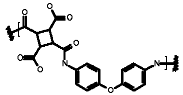 |

The different additives are supplied for example by Aldrich, TCI, Acros, BASF, Momentive.

The composition comprising a polymer obtained from the formula I and an additive described in this invention allows stabilization of the electro-optical properties. In the following examples, the stabilization of the alignment quality (contrast ratio) via the use of this composition is shown.

### Example 1:

A 5.5 wt% solution of polymer P1 is prepared by mixing the solid P1 in NMP and stirring thoroughly until the solid is dissolved. To this solution 3 wt% of 4-Isobutylphenyl-4'-methylphenyliodonium hexafluorophosphate (Irgacure 250 from BASF) are added. Other diaryl iodonium salts can be used instead of Irgacure 250. Then a second solvent, butyl cellusolve (BC) is added and the whole composition is stirred thoroughly to obtain the final solution. The solvent ratio between NMP and butyl cellulose is 1:1.

The above polymer solution is spin-coated onto two ITO coated glass substrates at a spin speed of 1700 rpm for 30 seconds. After spin coating the substrates are subjected to baking procedure consisting of pre-baking for 90 seconds at 130°C and post-baking for 40 minutes at a temperature of 200°C.The resulting layer thickness is around 80 nm. The substrates with the coated polymer layer on top are exposed to linearly polarized UV light (LPUV) at an incidence angle of 0° relative to the normal of the substrate surface. The plane of polarization is within the plane spanned by the substrate normal and the propagation direction of the light. The applied exposure dose is 100 mJ/cm². After LPUV exposure, a cell is assembled with the 2 substrates, the exposed polymer layers facing to the inside of the cell. The substrates are adjusted relative to each other such that the induced alignment directions are parallel to each other. The cell is capillary filled with liquid crystal MLC7067 (Merck KGA), which has a positive dielectric anisotropy. After that, the cell is optionally annealed at about 130 °C for 30 minutes and cooled down to room temperature. Alignment quality of the liquid crystal in the cell is checked by placing the cell between two crossed polarizers and adjusted to obtain dark state. The alignment quality is defined to be good if the dark state shows no defects and the liquid crystal is well oriented. The alignment quality is defined to be medium if the dark state has light leakage because of slight inhomogeneous orientation of liquid crystal in some areas of the cell. The alignment quality is defined to be worse, if liquid crystal is not oriented with absence of dark state.

The liquid crystal in the cell showed well defined and homogeneous planar orientation before and after thermal annealing of the cell.

### Comparative example 1

A 5.5 wt% solution of polymer P1 is prepared by mixing the solid P1 in NMP and stirring thoroughly until the solid is dissolved. Then a second solvent, butyl cellusolve (BC) is added and the whole composition is stirred thoroughly to obtain the final solution. The solvent ratio between NMP and butyl cellulose is 1:1.

The above polymer solution is spin-coated onto two ITO coated glass substrates at a spin speed of 1700 rpm for 30 seconds. After spin coating the substrates are subjected to baking procedure consisting of pre-baking for 90 seconds at 130°C and post-baking for 40 minutes at a temperature of 200 °C. The resulting layer thickness is around 80 nm. The substrates with the coated polymer layer on top are exposed to linearly polarized UV light (LPUV) at an incidence angle of 0° relative to the normal of the substrate surface. The plane of polarization is within the plane spanned by the substrate normal and the propagation direction of the light. The applied exposure dose is 100 mJ/cm². After LPUV exposure, a cell is assembled with the 2 substrates, the exposed polymer layers facing to the inside of the cell. The substrates are adjusted relative to each other such that the induced alignment directions are parallel to each other. The cell is capillary filled with liquid crystal MLC7067 (Merck KGA), which has a positive dielectric anisotropy. After that, the cell is optionally annealed at about 130 °C for 30 minutes and cooled down to room temperature. The liquid crystal in the cell showed very bad planar orientation before and after thermal annealing of the cell.

### Example 2

The alignment quality of the cells from example 1 and comparative example 1 are quantified by the measurement of the contrast ratio (CR). The contrast of an unbiased IPS cell is determined with a polarizing microscope equipped with a photo-multiplier to measure the transmitted light power. As a light source a LED backlight from ELDIM is used. The measurement area in the focal plane (sample) of the microscope objective is about 1 mm². Without sample the polarizers from the microscope are brought to the perpendicular position where the detector signal displays a minimum value. The cell is then fixed on a rotatable sample folder under the microscope objective. For determination of the contrast two measurements are performed. For the first measurement, the cell is rotated until the detector displays a minimum value V₀. In this position, the alignment direction of the cell is parallel to the polarizer and V₀ is defined as the dark state. Then, for the second measurement the cell is rotated by 90° until the detector displays a maximum value Vₘₐₓ defined as the bright state. The contrast of the sample is the determined as the ratio bright state to dark state (CR = Vₘₐₓ/V₀). If the value is below 500, the contrast is defined as -, if the value is above 1000 the contrast is defined as ++.

| | wt% of additives | Contrast ratio |
|---|---|---|
| Comparative Example 1 | 0 | - |
| Example 1 | 3 | ++ |

### Example 3

A cell is prepared as in example 1, except that the solution to be coated comprised the polymer P1 and 2% of 4-Isobutylphenyl-4'-methylphenyliodonium hexafluorophosphate (Irgacure 250 from BASF). The liquid crystal in the cell showed well defined and homogeneous planar orientation before and after thermal annealing of the cell. A tilt angle below 0.1 °is measured using the rotating analyzer method.

### Example 4

A cell is prepared as in example 1, except that the solution to be coated comprised the polymer P1 and 3% of 2-Methyl-1[4-(methylthio)phenyl]-2-morpholinopropan-1-one ( Irgacure 907). The liquid crystal in the cell showed well defined and homogeneous planar orientation before and after thermal annealing of the cell. A tilt angle below 0.1 ° is measured using the rotating analyzer method.

### Example 5

A cell is prepared as in example 1, except that the solution to be coated comprised the polymer P1 and 3% of tris(4-(4-acetylphenylthio)phenyl)sulfonium tetrakis(pentafluorophenyl)borate. The liquid crystal in the cell showed well defined and homogeneous planar orientation before and after thermal annealing of the cell. A tilt angle below 0.1 ° is measured using the rotating analyzer method.

### Example 6

A cell is prepared as in example 1, except that the solution to be coated comprised the polymer P1 and 1% of dodecylbenzenesulfonic acid The liquid crystal in the cell showed well defined and homogeneous planar orientation before and after thermal annealing of the cell. A tilt angle below 0.1° is measured using the rotating analyzer method.

### Example 7

The Contrast ratio measurement with the method described in example 2 is performed for the cells obtained in example 3, example 4, example 5 and example 6.

| | wt% of additives | CR |
|---|---|---|
| Example 3 | 2 | ++ |
| Example 4 | 3 | ++ |
| Example 5 | 3 | ++ |
| Example 6 | 1 | ++ |
| Comparative example 1 | 0 | - |

### Example 8

A cell is prepared as in example 1, except that a 5.5 wt% solution is prepared by mixing the polysiloxane P1 and a polyamic acid PAA-1 in ratio of 10:90 per weight % in NMP to form a blend composition. The mixture is stirred thoroughly until the solid is dissolved and then 4 wt% of 4-Isobutylphenyl-4'-methylphenyliodonium hexafluorophosphate (Irgacure 250 from BASF) are added. Then a second solvent, butyl cellusolve (BC) is added and the whole composition is stirred thoroughly to obtain the final solution. The solvent ratio between NMP and butyl cellulose is 1:1.

The spin speed used is 2500 rpm for 30 seconds to obtain a thickness layer of about 100 nm. The liquid crystal in the cell showed well defined and homogeneous planar orientation before and after thermal annealing of the cell.

### Example 9

A cell is prepared as in example 1, except that the solution to be coated comprised the polysiloxane P1 and the polyamic acid PAA-1 in ratio of 10:90 per weight % and 2% of 4-Isobutylphenyl-4'-methylphenyliodonium hexafluorophosphate (Irgacure 250 from BASF) The liquid crystal in the cell showed well defined and homogeneous planar orientation before and after thermal annealing of the cell.

### Example 10

A cell is prepared as in example 1, except that the solution to be coated comprised the polysiloxane P1 and the polyamic acid PAA-1 in ratio of 10:90 per weight % and 4% of UV9390C from Momentive The liquid crystal in the cell showed well defined and homogeneous planar orientation before and after thermal annealing of the cell.

### Example 11

A cell is prepared as in example 1, except that the solution to be coated comprised the polysiloxane P1 and the polyamic acid PAA-1 in ratio of 10:90 per weight % and 5% of 4-Isobutylphenyl-4'-methylphenyliodonium hexafluorophosphate (Irgacure 250 from BASF). The liquid crystal in the cell showed well defined and homogeneous planar orientation before and after thermal annealing of the cell.

### Comparative example 13

A cell is prepared as in example 1, except that a 5.5 wt% solution is prepared by mixing the polysiloxane P1 and a polyamic acid PAA-1 in ratio of 10:90 per weight % in NMP to form a blend composition. The mixture was stirred thoroughly till the solid is dissolved. Then a second solvent butyl cellusolve (BC) is added and the whole composition is stirred thoroughly to obtain final solution. The solvent ratio between NMP and butyl cellulose is 1:1.

The spin speed used is 2500 rpm for 30 seconds to obtain a thickness layer of 100 nm. The liquid crystal in the cell showed defined and homogeneous planar orientation before and after thermal annealing of the cell.

### Example 14

The contrast ratio measurement is performed as described in example 2 for the cell obtained in example 8, example 9, example 10, example 11, example 12 and comparative example 14 with the proviso that if the value is below 3000 the contrast is defined as - and if the value is above 3000 the contrast is defined as ++.

| | wt% of additives | CR |
|---|---|---|
| Example 8 | 4 | ++ |
| Example 9 | 2 | ++ |
| Example 10 | 4 | ++ |
| Example 11 | 5 | ++ |
| Comparative example 13 | 0 | - |

This example shows that for compositions according to the present invention have better contrast ratios after thermal treatment compared to state of the art compositions.

### Example 15

A cell is prepared as in example 1, except that the solution to be coated comprises the polymer P2 and 2% of 4-Isobutylphenyl-4'-methylphenyliodonium hexafluorophosphate (Irgacure 250 from BASF). The liquid crystal in the cell showed well defined and homogeneous planar orientation before and after thermal annealing of the cell.

### Comparative example 15:

A cell is prepared as in Comparative example 1, except that the solution to be coated comprises the polymer P2. The liquid crystal in the cell showed bad planar orientation before and after thermal annealing of the cell.

### Example 16

The Contrast ratio measurement is performed with the method described in example 2 for the cell obtained in example 15 and in comparative example 15.

| | wt% of additives | CR |
|---|---|---|
| Comparative Example 15 | 0 | - |
| Example 15 | 2 | ++ |

### Example 17

A cell is prepared as in example 1, except that the solution to be coated comprises the polymer P3 and 2% of 4-Isobutylphenyl-4'-methylphenyliodonium hexafluorophosphate (Irgacure 250 from BASF). The liquid crystal in the cell showed well defined and homogeneous planar orientation before and after thermal annealing of the cell.

### Comparative example 17

A cell is prepared as in Comparative example 1, except that the solution to be coated comprises the polymer P3. The liquid crystal in the cell showed bad planar orientation before and after thermal annealing of the cell.

### Example 18

The Contrast ratio measurement is performed with the method described in example 2 for the cell obtained in example 17 and in comparative example 17.

| | wt% of additives | CR |
|---|---|---|
| Comparative Example 17 | 0 | - |
| Example 17 | 5 | ++ |

### Example 19

A cell is prepared as in example 1, except that the solution to be coated comprises the polymer P4 and 5% of 4-Isobutylphenyl-4'-methylphenyliodonium hexafluorophosphate (Irgacure 250 from BASF). The liquid crystal in the cell showed well defined and homogeneous planar orientation before and after thermal annealing of the cell.

### Comparative example 19

A cell is prepared as in Comparative example 1, except that the solution to be coated comprises the polymer P4. The liquid crystal in the cell showed bad planar orientation before and after thermal annealing of the cell.

### Example 20

The Contrast ratio measurement is performed with the method described in example 2 for the cell obtained in example 19 and in comparative example 19

| | wt% of additives | Contrast Ratio |
|---|---|---|
| Comparative Example 19 | 0 | - |
| Example 19 | 5 | ++ |

### Example 21

A cell is prepared as in example 1, except that the solution to be coated comprised the polymer P5 and 5% of 4-Isobutylphenyl-4'-methylphenyliodonium hexafluorophosphate (Irgacure 250 from BASF). The liquid crystal in the cell showed well defined and homogeneous planar orientation before and after thermal annealing of the cell.

### Comparative example 21

A cell is prepared as in Comparative example 1, except that the solution to be coated comprised the polymer P5. The liquid crystal in the cell showed bad planar orientation before and after thermal annealing of the cell.

### Example 22

The Contrast ratio measurement is performed with the method described in example 2 for the cell obtained in example 21 and in comparative example 21.

| | wt% of additives | Contrast Ratio |
|---|---|---|
| Comparative Example 21 | 0 | - |
| Example 21 | 5 | ++ |

### Example 23 (not according to the invention)

A cell is prepared as in example 1, except that the solution to be coated comprises the polymer P6 and 5% of 4-Isobutylphenyl-4'-methylphenyliodonium hexafluorophosphate (Irgacure 250 from BASF). The liquid crystal in the cell showed well defined and homogeneous planar orientation before and after thermal annealing of the cell.

### Comparative example 23

A cell is prepared as in Comparative example 1, except that the solution to be coated comprises the polymer P6. The liquid crystal in the cell showed bad planar orientation before and after thermal annealing of the cell.

### Example 24

The Contrast ratio measurement is performed with the method described in example 2 for the cell obtained in example 22 and in comparative example 22.

| | wt% of additives | Contrast Ratio |
|---|---|---|
| Comparative Example 23 | 0 | 5 |
| Example 23 | 5 | 370 |

## Claims

1. A composition comprising a photo-alignable material comprising a photo-alignable material comprising or deriving from a monomer of formula (IV) 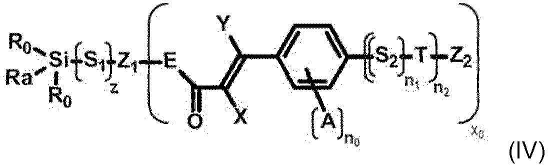 wherein
Rₐ represents OH, Cl, substituted or unsubstituted alkoxyl group having 1 to 20 carbons, alkyl group having 1 to 20 carbons, or aryl group having 1 to 20 carbons; S₁ represents a substituted or unsubstituted C₁-C₂₄ straight chain alkyl;
z is an integer from 0 to 15;
Z₁ represents a substituted or unsubstituted C₅-C₆ alicyclic group;
n₀ is an integer from 0 to 4;
n₁ is an integer from 0 to 15;
n₂ is an integer from 1 to 15;
x₀ is an integer from 1 to 2;
X, Y are H;
S₂ represents a cyclic aromatic straight-chain or branched, substituted or unsubstituted C₁-C₂₄ alkylen in which one or more -C-, -CH-, -CH₂- groups may be replaced by a linking group;
E represents O, or S or NH;
A represents halogen, H or substituted or unsubstituted C₁-C₂₄ alkyl, a substituted or unsubstituted C₁-C₂₄ alkenyl, a substituted or unsubstituted C₁-C₂₄ alkynyl, or a carboxylic acid, wherein one or more, -C-, -CH-, -CH₂-, group may independently from each other be replaced by a heteroatom;
R₀ represents OH, Cl, a linear or branched, substituted or unsubstituted alkoxyl group having 1 to 20 carbons, wherein one or more, -C-, -CH-, -CH₂-, could be replaced by unsubstituted or substituted C₆-C₂₀ aryl group;
Z₂ is CN;
T represents an unsubstituted or substituted, straight-chain C₁-C₁₆alkyl;
and an additive selected from the group consisting of acid generators, base generators, acids and bases.

2. A composition comprising a photo-alignable material according to claims 1 or 2, wherein
Rₐ, z, n₀, n₁, n₂, x₀, S₂, R₀, T, Z₁, S₁, E, X, Y and Z₂ are as described above; and
A represents H, one or more halogens, one or more methoxy groups or one or more carboxylic groups.

3. A composition comprising a photo-alignable material according to any one of claims 1 or 2, wherein
Rₐ, z, n₀, n₁, n₂, x₀, S₂, R₀, T, A, Z₁, S₁, X, Y and Z₂ are as described above; and
E represents O.

4. A composition comprising a photo-alignable material according to any one of claims 1 to 3 wherein
Rₐ, z, n₀, n₁, n₂, x₀, S₂, R₀, Z₂, T, A, Z₁, X, Y, E and Z₂ are as described above; and S₁ is ethyl group.

5. A composition according to any one of claims 1 to 4, wherein the additive is an acid generator or a base generator.

6. A composition according to claim 5 wherein the acid generator is selected from the group consisting of diaryl iodonium salt or sulfonium salt.

7. A composition according to claim 5 wherein the base generator is an aminoketone.

8. A composition according to any one of the preceding claims, further comprising a second polymer or copolymer which is not identical to the photo-aligning material

9. Composition according to claim 8 wherein the second polymer or copolymer is a polyamic acid or polyimide.

10. Use of the composition according to any one of claims 1 to 9 for the orientation of liquid crystals.

11. Optical or electro-optical unstructured or structured elements comprising at least the composition according to any one of claims 1 to 10.

## Patentansprüche

1. Eine Zusammensetzung umfassend ein photo-ausrichtbares Material umfassend ein photo-ausrichtbares Material, das ein Monomer der Formel (IV) umfasst oder davon abgeleitet ist 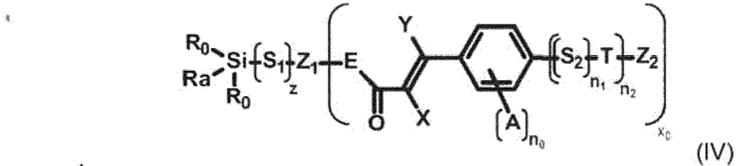 worin
Rₐ ein OH, Cl, eine substituierte oder eine nicht substituierte Alkoxygruppe mit 1 bis 20 Kohlenstoffatomen, eine Alkylgruppe mit 1 bis 20 Kohlenstoffatomen, oder eine Arylgruppe mit 1 bis 20 Kohlenstoffatomen darstellt;
S₁ ein substituiertes oder ein nicht substituiertes geradkettiges C₁-C₂₄-Alkyl darstellt;
z eine ganze Zahl von 0 bis 15 ist;
Z₁ eine substituierte oder nicht substituierte C₅-C₆-alicyclische Gruppe darstellt;
n₀ eine ganze Zahl von 0 bis 4 ist;
n₁ eine ganze Zahl von 0 bis 15 ist;
n₂ eine ganze Zahle von 1 bis 15 ist;
x₀ eine ganze Zahl von 1 bis 2 ist;
X, Y ein H darstellen;
S₂ ein cyclisches, ein aromatisches, ein geradkettiges oder verzweigtes, ein substituiertes oder nicht substituiertes C₁-C₂₄-Alkylen darstellt, worin eine oder mehrere -C-, -CH-, -CH₂-Gruppen durch eine Verknüpfungsstelle ersetzt sein können; E ein O oder ein S oder ein NH darstellt;
A ein Halogen, ein H oder ein substituiertes oder nicht substituiertes C₁-C₂₄-Alkyl, ein substituiertes oder nicht substituiertes C₁-C₂₄-Alkenyl, ein substituiertes oder nicht substituiertes C₁-C₂₄-Alkinyl oder eine Carboxylgruppe darstellt, worin eine oder mehrere -C-, -CH-, -CH₂-Gruppen unabhängig voneinander durch ein Heteroatom ersetzt sein können;
Ro ein OH, ein Cl, eine lineare oder verzweigte, substituierte oder nicht substituierte Alkoxygruppe mit 1 bis 20 Kohlenstoffatomen darstellt, worin jeweils eine oder mehrere -C-, -CH-, -CH₂- durch eine nicht substituierte oder substituierte C₆-C₂₀-Arylgruppe ersetzt sein können;
Z₂ ein CN darstellt;
T ein nicht substituiertes oder substituiertes, geradkettiges C₁-C₁₆-Alkyl darstellt; und ein Additiv ausgewählt aus der Gruppe bestehend aus Säuregeneratoren, Basengeneratoren, Säuren und Basen.

2. Eine Zusammensetzung umfassend ein photo-ausrichtbares Material gemäß Anspruch 1, worin
Ra, z, n₀, n₁, n₂, x₀, S₂, R₀, T, Z₁, S₁, E, X, Y und Z₂ wie oben beschrieben sind; und
A ein H, ein oder mehrere Halogene, eine oder mehrere Methoxygruppen oder eine oder mehrere Carboxylgruppen darstellt.

3. Eine Zusammensetzung umfassend ein photo-ausrichtbares Material gemäß einem der Ansprüche 1 oder 2, worin
Rₐ, z, n₀, n₁, n₂, x₀, S₂, R₀, T, A, Z₁, S₁, X, Y und Z₂ wie oben beschrieben sind; und
E ein O darstellt.

4. Eine Zusammensetzung umfassend ein photo-ausrichtbares Material gemäß einem der Ansprüche 1 bis 3, worin
Rₐ, z, n₀, n₁, n₂, x₀, S₂, R₀, Z₂, T, A, Z₁, X, Y, E und Z₂ wie oben beschrieben sind; und
S₁ eine Ethyl-Gruppe darstellt.

5. Eine Zusammensetzung gemäß einem der Ansprüche 1 bis 4, in der das Additiv ein Säuregenerator oder ein Basengenerator ist.

6. Eine Zusammensetzung gemäß Anspruch 5, wobei der Säuregenerator ausgewählt ist aus der Gruppe bestehend aus Diaryl-Iodonium-Salz oder Sulfonium-Salz.

7. Eine Zusammensetzung gemäß Anspruch 5, in der der Basengenerator ein Aminoketon ist.

8. Eine Zusammensetzung gemäß einem der vorhergehenden Ansprüche, die ferner ein zweites Polymer oder Copolymer umfasst, welches nicht identisch mit dem photo-ausrichtbaren Material ist.

9. Eine Zusammensetzung gemäß Anspruch 8, in der das zweite Polymer oder Copolymer eine Polyamidsäure oder ein Polyimid darstellt.

10. Verwendung der Zusammensetzung gemäß einem der Ansprüche 1 bis 9 zur Ausrichtung von Flüssigkristallen.

11. Optische oder elektro-optische unstrukturierte oder strukturierte Elemente, die mindestens die Zusammensetzung gemäß den Ansprüchen 1 bis 10 umfassen.

## Revendications

1. Composition comprenant un matériau photo-alignable comprenant un matériau photo-alignable comprenant ou dérivant d'un monomère de formule (IV) 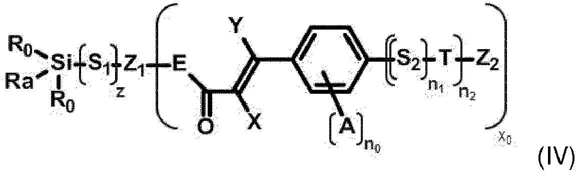 dans laquelle
Rₐ représente OH, Cl, un groupe alcoxy substitué ou non substitué ayant 1 à 20 atomes de carbone, un groupe alkyle ayant 1 à 20 atomes de carbone, ou un groupe aryle ayant 1 à 20 atomes de carbone ;
S₁ représente un alkyle à chaîne droite en C₁ à C₂₄ substitué ou non substitué ;
z est un entier de 0 à 15 ;
Z₁ représente un groupe alicyclique en C₅ à C₆ substitué ou non substitué ;
n₀ est un entier de 0 à 4 ;
n₁ est un entier de 0 à 15 ;
n₂ est un entier de 1 à 15 ;
x₀ est un entier de 1 à 2 ;
X et Y sont H ;
S₂ représente un alkylène en C₁ à C₂₄ cyclique, aromatique, à chaîne droite ou ramifiée, substitué ou non substitué, dans lequel un ou plusieurs groupes -C-, -CH-, -CH₂- peuvent être remplacés par un groupe de liaison ;
E représente O, S ou NH ;
A représente un halogène, H ou un alkyle en C₁ à C₂₄ substitué ou non substitué, un alcényle en C₁ à C₂₄ substitué ou non substitué, un alcynyle en C₁ à C₂₄ substitué ou non substitué, ou un acide carboxylique, où un ou plusieurs groupes -C-, -CH-, -CH₂- peuvent indépendamment des autres être remplacés par un hétéroatome ;
R₀ représente OH, Cl, un groupe alcoxy linéaire ou ramifié, substitué ou non substitué, ayant 1 à 20 atomes de carbone, où un ou plusieurs groupes -C-, -CH-, -CH₂-peuvent être remplacés par des groupes aryle en C₆ à C₂₀ substitués ou non substitués ;
Z₂ est CN :
T représente un alkyle en C₁ à C₁₆ à chaîne droite substitué ou non substitué ;
et un additif choisi dans l'ensemble constitué par les générateurs d'acide, les générateurs de base, les acides, et les bases.

2. Composition comprenant un matériau photo-alignable selon les revendications 1 ou 2, dans laquelle
Rₐ, z, n₀, n₁, n₂, x₀, S₂, R₀, T, Z₁, S₁, E, X, Y et Z₂ sont tels que décrits ci-dessus ; et
A représente H, un ou plusieurs halogènes, un ou plusieurs groupes méthoxy ou un ou plusieurs groupes carboxyliques.

3. Composition comprenant un matériau photo-alignable selon l'une quelconque des revendications 1 et 2, dans laquelle
Rₐ, z, n₀, n₁, n₂, x₀, S₂, R₀, T, A, Z₁, S₁, X, Y et Z₂ sont tels que décrits ci-dessus ; et
E représente O.

4. Composition comprenant un matériau photo-alignable selon l'une quelconque des revendications 1 à 3, dans laquelle
Rₐ, z, n₀, n₁, n₂, x₀, S₂, R₀, Z₂, T, A, Z₁, X, Y, E et Z₂ sont tels que décrits ci-dessus ; et
S₁ est un groupe éthyle.

5. Composition selon l'une quelconque des revendications 1 à 4, dans laquelle l'additif est un générateur d'acide ou un générateur de base.

6. Composition selon la revendication 5, dans laquelle le générateur d'acide est choisi dans l'ensemble constitué par un sel de diaryliodonium et un sel de sulfonium.

7. Composition selon la revendication 5, dans laquelle le générateur de base est une aminocétone.

8. Composition selon l'une quelconque des revendications précédentes, comprenant en outre un deuxième polymère ou copolymère qui n'est pas identique au matériau de photo-alignement.

9. Composition selon la revendication 8, dans laquelle le deuxième polymère ou copolymère est un poly(acide amique) ou un polyimide.

10. Utilisation de la composition de l'une quelconque des revendications 1 à 9 pour l'orientation de cristaux liquides.

11. Eléments structurés ou non structurés optiques ou électro-optiques comprenant au moins la composition de l'une quelconque des revendications 1 à 10.
